# EUROPÄISCHE PATENTSCHRIFT

(11) **EP 4 185 497 B1**
(45) Veröffentlichungstag und Bekanntmachung des Hinweises auf die Patenterteilung: **26.06.2024**
(21) Anmeldenummer: 21743401.8
(22) Anmeldetag: 08.07.2021
(51) Int. Cl.: B60S 1/48, B60S 1/54, B08B 3/02, B08B 5/02

(54) **MEHRKANAL-REINIGUNGSVORRICHTUNG, MEHRKANAL-SENSORREINIGUNGSMODUL UND FAHRZEUG**
MULTI-CHANNEL CLEANING APPARATUS, MULTI-CHANNEL SENSOR-CLEANING MODULE, AND VEHICLE
APPAREIL DE NETTOYAGE À CANAUX MULTIPLES, MODULE DE NETTOYAGE À CAPTEUR À CANAUX MULTIPLES ET VÉHICULE

(30) Priorität: 23.07.2020 DE 102020119476
(43) Veröffentlichungstag der Anmeldung: 31.05.2023
(73) Patentinhaber: ZF CV Systems Global GmbH, 3006 Bern (CH)
(72) Erfinder: RICKE, Janik, 31311 Uetze (DE)
(74) Vertreter: Ohlendorf, Henrike
(86) Internationale Anmeldenummer: PCT/EP2021/068927
(87) Internationale Veröffentlichungsnummer: WO 2022/017810

(56) Entgegenhaltungen:
- DE-A1-102018 126 090
- US-A1- 2015 343 999
- US-A1- 2018 015 907
- US-A1- 2020 001 832
- US-A1- 2020 139 940

## Beschreibung

Die Erfindung betrifft eine Mehrkanal-Reinigungsvorrichtung zum Bereitstellen eines Flüssigkeits-Reinigungsimpulses und/oder eines Druckluft-Reinigungsimpulses gemäß dem Oberbegriff des Anspruchs 1. Die Erfindung betrifft weiter ein Sensorreinigungsmodul, ein Fahrzeug und ein Verfahren zum Betreiben einer Reinigungsvorrichtung.

Reinigungsvorrichtungen für Fahrzeuge, insbesondere zum Bereitstellen eines Flüssigkeits-Reinigungsimpulses und eines Druckluft-Reinigungsimpulses, sind allgemein bekannt. Die US 2018/015907 A1 offenbart eine Mehrkanal-Reinigungsvorrichtung für ein Fahrzeug nach dem Oberbegriff des Anspruchs 1.

So beschreibt beispielsweise die EP 3 168 094 B1 ein System zum Reinigen einer externen, am Fahrzeug montierten Sensoroberfläche, aufweisend eine Luftdüse, welche dazu ausgerichtet ist, Luft auf eine Sensoroberfläche auszugeben; eine Luftpumpe, welche einen Fluideinlass, einen Luftauslass, eine Luft-Fluid-Grenzfläche und eine variable Volumenkompressionskammer, welche mit dem Luftauslass kommuniziert, aufweist; mit einer Luftflusssteuerungseinrichtung, welche mit der Luftdüse und dem Luftauslass kommuniziert, um den Luftfluss dadurch zu steuern; und einer Flüssigkeitspumpe, welche mit dem Fluideinlass kommuniziert, um einen Fluss von unter Druck stehender Flüssigkeit liefert, so dass sich das Volumen der Kompressionskammer ändert, um ein Volumen von Druckluft mit einem Absolutdruck unter 10 bar zu erzeugen.

Derartige Ansätze sind jedoch weiter verbesserungswürdig, insbesondere was die Versorgung von mehreren Reinigungsdüsen, insbesondere zum Reinigen von mehreren Sensoroberflächen, betrifft.

Auch sind Reinigungsvorrichtungen verbesserungswürdig hinsichtlich der individuelle Steuerbarkeit der Reinigungsimpulse und insbesondere eine von einem Flüssigkeits-Reinigungsimpuls unabhängige Beaufschlagung einer Sensoroberfläche mit Druckluft betrifft.

Wünschenswert ist es daher, die Funktion und den Aufbau der Reinigungsvorrichtung zu verbessern, insbesondere unter relativ geringem apparativen Aufwand eine Versorgung mehrerer Reinigungsdüsen zu ermöglichen und eine verbesserte Steuerbarkeit, insbesondere eine Steuerbarkeit von Reinigungsimpulsen und/oder Druckluftströmungen, zu ermöglichen.

An dieser Stelle setzt die Erfindung an deren Aufgabe es ist, eine verbesserte Reinigungsvorrichtung anzugeben, bei dem insbesondere eine Versorgung mehrerer Reinigungsdüsen und/oder die Möglichkeit zur Steuerung einzelner Reinigungsimpulse verbessert ist.

Die Aufgabe, betreffend die Reinigungsvorrichtung, wird durch die Erfindung in einem ersten Aspekt mit einer Mehrkanal-Reinigungsvorrichtung des Anspruchs 1 gelöst.

Die Erfindung geht aus von einer Mehrkanal-Reinigungsvorrichtung für ein Fahrzeug zum Bereitstellen eines Flüssigkeits-Reinigungsimpulses und/oder eines Druckluft-Reinigungsimpulses, für mindestens zwei Reinigungsdüsen, aufweisend:
- einen Moduldruckluftanschluss zum Annehmen von Druckluft, und
- einen Modulflüssigkeitsanschluss zum Annehmen von Reinigungsflüssigkeit.

Erfindungsgemäß sind bei der Mehrkanal-Reinigungsvorrichtung mindestens zwei Düsenstränge vorgesehen, wobei ein Düsenstrang ausgebildet ist zum Versorgen mindestens einer Reinigungsdüse unabhängig von einem anderen Düsenstrang, wobei jeder Düsenstrang aufweist:
- einen Druckzylinder mit einem Zylindervolumen, aufweisend ein bewegliches Trennmittel, das das Zylindervolumen in eine Druckluft aufnehmende Luftkammer und eine Reinigungsflüssigkeit aufnehmende Flüssigkeitskammer fluiddicht aufteilt, wobei
- die Luftkammer einen Luftkammer-Anschluss aufweist, der mit Druckluft zum Füllen der Luftkammer beaufschlagbar ist, wobei bei einem Füllen der Luftkammer durch Bewegen des Trennmittels gegen eine Rückstellkraft und Vergrößern der Luftkammer ein Verkleinern der Flüssigkeitskammer erfolgt, wodurch Reinigungsflüssigkeit in Form des Flüssigkeits-Reinigungsimpulses über einen Flüssigkeitskammer-Anschluss der Flüssigkeitskammer an einer Flüssigkeits-Düsenleitung bereitgestellt wird, und
- ein Schaltventil, das ausgebildet ist zum Herstellen einer pneumatischen Verbindung zwischen dem Moduldruckluftanschluss und dem Luftkammer-Anschluss in einer Belüftungsstellung, und
- ein Bypassventil, das ausgebildet ist zum Herstellen einer pneumatischen Verbindung zwischen dem Moduldruckluftanschluss und der Druckluft-Düsenleitung vorbei an dem Schaltventil in einer Öffnungsstellung zum Bereitstellen einer Bypass-Druckluftströmung.

Die Erfindung geht aus von der Überlegung, dass eine Versorgung von mehreren Reinigungsdüsen mit Reinigungsmedien, insbesondere Reinigungsflüssigkeit und Druckluft, generell vorteilhaft ist, um eine mit fortschreitender technischer Entwicklung stetig wachsende Anzahl von Sensoren zuverlässig zu reinigen. Dabei ist eine möglichst zentrale Versorgung, insbesondere in einer Mehrkanal-Reinigungsvorrichtung, besonders vorteilhaft, da - im Unterschied zu einer Vielzahl einzelner Reinigungsvorrichtungen - der Einbauaufwand, Gewicht, Bauraum und Kosten vorteilhaft reduziert werden können. Dabei soll jedoch eine individuelle Steuerbarkeit einzelner Reinigungsdüsen oder einzelner Gruppen von Reinigungsdüsen vorteilhaft möglich sein. Durch eine zentrale Mehrkanal-Reinigungsvorrichtung mit einer, insbesondere geringen, Anzahl an definierten Anschlüssen und Schnittstellen, insbesondere einem Moduldruckluftanschluss, einem Modulflüssigkeitsanschluss, einem Modulsteueranschluss und einer Anzahl an Flüssigkeit-Düsenanschlüssen und Druckluft-Düsenanschlüssen, kann eine Integration der Mehrkanal-Reinigungsvorrichtung vorteilhaft vereinfacht und verbessert werden.

Entsprechend der unabhängig voneinander zu versorgenden Reinigungsdüsen kann eine entsprechende Anzahl von Düsensträngen in der Mehrkanal-Reinigungsvorrichtung vorgenommen werden. Durch den Einsatz von Druckzylindern zur Erzeugung sowohl des Druckluft-Reinigungsimpulses als auch des Flüssigkeit-Reinigungsimpulses können vorteilhaft beide Reinigungsmedien, nämlich Druckluft und Reinigungsflüssigkeit, mit nur einer Druckquelle, insbesondere einem Kompressor oder einem Druckspeicher, unter einem Druck, das heißt in Form von Reinigungsimpulsen, einer Reinigungsdüse bereitgestellt werden. Somit kann vorteilhaft eine weitere Druckquelle, insbesondere eine Flüssigkeitspumpe, eingespart werden, wodurch der apparative Aufwand vorteilhaft weiter reduziert wird.

Das Vorsehen eines Bypassventils in einem Düsenstrang ermöglicht dabei vorteilhaft die von dem Druckzylinder unabhängige Erzeugung einer Bypass-Druckluftströmung, wodurch eine Druckluftströmung zur Reinigung einer Sensoroberfläche bereitgestellt werden kann. Dies ermöglicht insbesondere bei Regen oder bei einer trockenen Reinigung im Sinne eines Freiblasens der Sensoroberfläche von Partikeln in vorteilhaft flüssigkeitssparender Weise eine effektive Reinigung der Sensoroberfläche.

Vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

Die Reinigungsflüssigkeit kann insbesondere Wasser, oder eine Mischung aus Wasser mit Reinigungsmittel und/oder mit Frostschutzmittel, sein.

Insbesondere ist das Schaltventil ausgebildet zum Herstellen einer pneumatischen Verbindung zwischen dem Luftkammer-Anschluss und einer Druckluft-Düsenleitung zum Bereitstellen des Druckluft-Reinigungsimpulses durch Zurückbewegen des Trennmittels durch die Rückstellkraft in einer Entlüftungsstellung.

Im Rahmen einer bevorzugten Weiterbildung ist vorgesehen, dass das Trennmittel ein axial entlang einer Zylinderachse des Druckzylinders bewegbarer und dichtend an einer Zylinderinnenwand des Druckzylinders anliegender Zylinderstempel ist, wobei der Zylinderstempel zylindrisch ausgebildet ist und eine Stempelhöhe aufweist und mit einer Rückstellfeder, aufweisend eine Federkonstante, zum Erzeugen der Rückstellkraft im Druckzylinder gehalten wird.

Über die Auswahl bzw. das Einstellen einer Federkonstante der Rückstellfeder eines Druckzylinders kann die Rückstellkraft und damit vorteilhaft ein Impulsdruck, mit dem insbesondere ein Druckluft-Reinigungsimpuls dieses Druckzylinders bereitgestellt wird, beeinflusst werden. Hierbei ergibt sich der Impulsdruck aus einer Stempelfläche des Zylinderstempels multipliziert mit der Rückstellkraft. Die Federkonstante der Rückstellfeder ist dabei so zu wählen, dass sich ein Impulsdruck ergibt, welcher geringer ist als ein Beaufschlagungsdruck, mit dem der Druckzylinder am Luftkammer-Anschluss beaufschlagt wird, damit die Rückstellfeder komprimiert werden kann. Die Federkonstante sollte bevorzugt so gewählt werden, dass eine Beaufschlagungskraft - die sich aus Beaufschlagungsdruck, mit dem der Luftkammeranschluss des Druckzylinders beaufschlagt wird multipliziert mit der Stempelfläche des Zylinderstempels ergibt - ausreicht, um den Zylinderstempel gegen die Kraft der Rückstellfeder zu verschieben. Die Beaufschlagungskraft ist somit bevorzugt höher als die Rückstellkraft der Feder. Entsprechend ist in dem Fall der Druck des resultierenden Druckluft-Reinigungsimpulses niedriger als der Beaufschlagungsdruck. Je höher der Beaufschlagungsdruck und entsprechend die Beaufschlagungskraft, desto größer ist der Druck des resultierenden Flüssigkeits-Reinigungsimpulses. Die Federkonstante kann vorteilhaft in Abhängigkeit des Beaufschlagungsdrucks ausgewählt werden, beispielsweise derart, dass die Beaufschlagungskraft doppelt so hoch ist wie die Rückstellkraft.

Im Rahmen einer bevorzugten Weiterbildung ist vorgesehen, dass mehrere, insbesondere sämtliche, Druckzylinder der Mehrkanal-Reinigungsvorrichtung in einem Druckzylinderblock, insbesondere als baugleiche Druckzylindermodule angeordnet sind. Insbesondere sind die Druckzylindermodule jeweils an ihrer Modulseite nebeneinander angeordnet, insbesondere verschraubt, zur Bildung eines Druckzylinderblocks. In bevorzugten Weiterbildungen kann ein Druckzylinderblock mit einer Anzahl an Druckzylindermodulen auch aus einem Stück gefräst, gedruckt, gegossen hergestellt sein. Auch andere geeignete Fertigungsverfahren, insbesondere urformende, umformende, zerspanende, fügende, additive oder dergleichen Fertigungsverfahren. Bei einem lösbaren Zusammenfügen, insbesondere mittels Verschrauben, kann man vorteilhaft die Anzahl der Druckzylindermodule individuell an einen konkreten Anwendungsfall anpassen.

Im Rahmen einer bevorzugten Weiterbildung ist vorgesehen, dass ein Zylinderstempel des Druckzylinders eines Düsenstrangs eine Stempelhöhe aufweist, die unterschiedlich ist von einer Stempelhöhe eines Zylinderstempels des Druckzylinders eines anderen Düsenstrangs. Über die Auswahl bzw. das Einstellen einer Stempelhöhe eines Zylinderstempels kann vorteilhaft, insbesondere bei einem baugleichen Druckzylinder und/oder Druckzylindermodul, ein effektives Fördervolumen angepasst werden. Hierüber lässt sich, insbesondere für einzelne Düsenstränge, ein individuelles effektives Fördervolumen eingestellt werden. Beispielsweise kann bei einem Düsenstrang, der eine Reinigungsdüse für eine Sensoroberfläche versorgt, welche relativ groß ist oder bei der eine relativ starke Verschmutzung zu erwarten ist, über eine geringe Stempelhöhe ein relativ großes effektives Fördervolumen einstellen.

Im Rahmen einer bevorzugten Weiterbildung ist vorgesehen, dass das Bypassventil als ein 2/2-Wegeventil, insbesondere 2/2-Wege-Magnetventil und/oder Patronenventil, ausgebildet ist. Das 2/2-Wegeventil ist bevorzugt als normal schließendes 2/2-Wegeventil ausgebildet. "Normal schließendes Ventil" bedeutet, dass sich das Ventil, insbesondere das 2/2-Wegeventil, im nicht angesteuerten, insbesondere nicht bestromten, Zustand in seiner Schließstellung befindet.

Im Rahmen einer bevorzugten Weiterbildung ist vorgesehen, dass das Bypassventil als ein, insbesondere normal öffnendes, 3/2 Wegeventil ausgebildet ist, wobei das 3/2 Wegeventil ausgebildet ist zum Herstellen einer pneumatischen Verbindung zwischen dem Moduldruckluftanschluss und der Druckluft-Düsenleitung in einer Öffnungsstellung, und zum Herstellen einer pneumatischen Verbindung zwischen der Druckluft-Düsenleitung und einem Entlüftungsanschluss des 3/2 Wegeventils in einer Schließstellung. Eine derartige Weiterbildung mit einem als 3/2-Wegeventil ausgebildeten Bypassventil ermöglicht vorteilhaft den Anschluss eines Schnellentlüftungsventils, insbesondere zum Erzeugen von Druckluftimpulsen.

Im Rahmen einer bevorzugten Weiterbildung ist vorgesehen, dass das Bypassventil als eine Anordnung aus einem, insbesondere normal öffnenden, 3/2-Wegeventil und einem Schnellentlüftungsventil gebildet ist, wobei
- das 3/2-Wegeventil ausgebildet ist zum Herstellen einer pneumatischen Verbindung zwischen dem Moduldruckluftanschluss und dem Schnellentlüftungsventil in einer Öffnungsstellung, und zum Herstellen einer pneumatischen Verbindung zwischen dem Schnellentlüftungsventil und einem Entlüftungsanschluss des 3/2-Wegeventils in einer Schließstellung,
- das Schnellentlüftungsventil zwischen dem Bypassventil und der Druckluft-Düsenleitung oder in einer die Reinigungsdüse mit der Druckluft-Düsenleitung pneumatisch verbindenden Druckluft-Düsenanschlussleitung angeordnet und ausgebildet ist zum Annehmen der Bypass-Druckluftströmung und zum Bereitstellen eines Bypass-Druckluft-Reinigungsimpulses. Durch die Anordnung aus einem 3/2-Wegeventil und einem Schnellentlüftungsventil kann vorteilhaft in einem Düsenstrang - unabhängig vom Druckzylinder in diesem Düsenstrang - ein Bypass-Druckluft-Reinigungsimpuls erzeugt werden. Gegenüber einer Bypass-Druckluftströmung kann durch das Schnellentlüftungsventil ein Bypass-Druckluft-Reinigungsimpuls mit einem höheren Druck und/oder einer höheren Geschwindigkeit für eine bessere Reinigungsleistung erzeugt werden. Über eine entsprechende konstruktive Auslegung eines Druckluftpuffers des Schnellentlüftungsventils kann der Bypass-Druckluft-Reinigungsimpuls, insbesondere sein Volumen, eingestellt werden.

In einer derartigen Weiterbildung, in der die 3/2 Wegeventil das Bypassventil als eine Anordnung aus einem 3/2-Wegeventil und einem Schnellentlüftungsventil gebildet ist, ist das 3/2-Wegeventil bevorzugt als normal öffnendes Ventil ausgebildet. "Normal öffnendes Ventil" bedeutet, dass sich das Ventil, hier das 3/2-Wegeventil, im nicht angesteuerten, insbesondere nicht bestromten, Zustand in seiner Öffnungsstellung befindet, und nur in seine - das Schnellentlüftungsventil an seinem zweiten Anschluss zur Abgabe des Bypass-Druckluft-Reinigungsimpuls entlüftende - Schließstellung geschaltet wird, wenn ein Bypass-Druckluft-Reinigungsimpuls bereitgestellt werden soll. Insbesondere ist das Schnellentlüftungsventil zwischen dem Bypassventil und der Reinigungsdüse angeordnet.

Dies hat den Vorteil, dass sich das 3/2-Wegeventil in nicht angesteuerten Zustand in seiner Öffnungsstellung befindet, und nur in seine - das Schnellentlüftungsventil am zweiten Anschluss zur Abgabe des Bypass-Druckluft-Reinigungsimpuls entlüftende - Schließstellung geschaltet wird, wenn ein Bypass-Druckluft-Reinigungsimpuls bereitgestellt werden soll.

Im Rahmen einer bevorzugten Weiterbildung ist vorgesehen, dass das Bypassventil als ein, insbesondere normal schließendes, 3/2 Wegeventil ausgebildet ist, wobei das 3/2 Wegeventil ausgebildet ist zum Herstellen einer pneumatischen Verbindung zwischen dem Moduldruckluftanschluss und der Druckluft-Düsenleitung in einer Öffnungsstellung, und zum Herstellen einer pneumatischen Verbindung zwischen dem Schnellentlüftungsventil und einem Entlüftungsanschluss des 3/2 Wegeventils in einer Schließstellung. In der Schließstellung kann der Entlüftungsanschluss gesperrt oder geöffnet sein. In einer derartigen Weiterbildung kann ein 3/2-Wegeventil, das insbesondere als pneumatisches Standardbauteil, beispielsweise als Patronenventil, gebildet ist, effektiv in der Funktion eines 2/2-Wegeventils genutzt werden. Im Gegensatz zu einer Weiterbildung, in der das Bypassventil aus eine Anordnung aus einem 3/2 Wegeventil und einem Schnellentlüftungsventil gebildet ist, ist in dieser Weiterbildung das 3/2-Wegeventil bevorzugt als normal schließendes Ventil ausgebildet, welches zum Bereitstellen einer Bypass-Druckluftströmung angesteuert und somit in seine Öffnungsstellung geschaltet wird. In derartigen Weiterbildungen kann ein annähernd baugleiches Schaltventil sowohl für Ausführungen mit Schnellentlüftungsventil, als auch für Ausführungen ohne Schnellentlüftungsventil verwendet werden, wobei das Schaltventil im zweiten Fall lediglich durch das Sperren des Entlüftungsanschlusses (und ggf. durch die Änderung von normal öffnend in normal schließend) angepasst werden muss.

Im Rahmen einer bevorzugten Weiterbildung ist vorgesehen, dass mindestens zwei Druckzylinder einem Düsenstrang zugeordnet sind, derart dass die Luftkammer-Anschlüsse der mindestens zwei Druckzylinder pneumatisch mit einem einzigen Schaltventil verbunden sind. In einer derartigen Weiterbildung kann vorteilhaft das effektives Fördervolumen eines Düsenstrangs durch ein gemeinsames Schalten mehrerer Druckzylinder eines Düsenstrangs durch ein einzelnes Schaltventil vergrößert, insbesondere vervielfacht, werden. Insbesondere kann ein derartiger Düsenstrang mit mindestens zwei Druckzylindern einer Reinigungsdüse, oder einer Anzahl von einer Sensoroberfläche zugordneten Reinigungsdüsen, zugeordnet sein. Auf diese Weise kann der apparative Aufwand zum Versorgen einer oder mehrerer Reinigungsdüsen zum Reinigen größerer Sensoroberflächen, beispielsweise eine Oberfläche eines LIDAR- oder RADAR-Sensors, vorteilhaft verringert werden, insbesondere durch das Einsparen eines oder mehrerer Schaltventile.

Im Rahmen einer bevorzugten Weiterbildung sind mindestens vier Düsenstränge und/oder vier Druckzylinder vorgesehen. Eine derartige Weiterbildung stellt eine geeignete Anzahl von Düsensträngen und/oder Druckzylindern für ein Fahrzeug, insbesondere für einen PKW, dar. Gleichwohl sind im Rahmen der Erfindung abweichende Anzahlen von Düsensträngen und/oder Druckzylindern möglich, beispielsweise zwei oder acht.

Im Rahmen einer bevorzugten Weiterbildung ist ein Modulsteueranschluss vorgesehen. Ein Modulsteueranschluss ermöglicht in vorteilhafter Weise einen zentralen Anschluss sämtlicher Steuerleitungen, insbesondere für die Schaltventile und/oder Bypassventile der Mehrkanal-Reinigungsvorrichtung. Insbesondere ist der Modulsteueranschluss als standardisierter Stecker und/oder Steckverbindung gebildet.

Im Rahmen einer bevorzugten Weiterbildung ist eine Modulsteuereinheit vorgesehen, die ausgebildet ist zur Kommunikation zwischen der Mehrkanal-Reinigungsvorrichtung, insbesondere dem Modulsteueranschluss der Mehrkanal-Reinigungsvorrichtung, und einer Fahrzeugsteuereinheit des Fahrzeugs, insbesondere über einen Fahrzeugbus. Insbesondere ist die Modulsteuereinheit ausgebildet zum Übersetzen von mittels des Fahrzeugbus 1026 übermittelten Steuersignalen 1022 in Schaltsignale für Schaltventile und/oder Bypassventile, und umgekehrt.

Die Erfindung führt in einem zweiten Aspekt auf ein Mehrkanal-Sensorreinigungsmodul, aufweisend ein Modulgehäuse, insbesondere ein Ventilpatronengehäuse, und eine Mehrkanal-Reinigungsvorrichtung gemäß dem ersten Aspekt der Erfindung. Bei dem Mehrkanal-Sensorreinigungsmodul werden die Vorteile der Mehrkanal-Reinigungsvorrichtung entsprechend vorteilhaft genutzt. Insbesondere erlaubt die Integration der Mehrkanal-Reinigungsvorrichtung in Form eines abgeschlossenen Mehrkanal-Sensorreinigungsmodul mit definierten Schnittstellen und/oder Anschlüssen eine verbesserte Integration in ein Fahrzeug, insbesondere unter relativ geringem Montageaufwand. Auch ermöglicht ein derartiges Mehrkanal-Sensorreinigungsmodul in verbesserter Weise eine Nachrüstung in bestehende Fahrzeuge. Ein Ventilpatronengehäuse ist insbesondere aus Aluminium oder Kunststoff oder dergleichen geeigneten Material als ein Block gebildet, in den durch geeignete Bearbeitungsverfahren eine Anzahl von Ventileinsätzen eingebracht ist mit entsprechenden Bohrungen oder dergleichen luft- und/oder fluidführenden Leitungen zwischen den Ventileinsätzen und/oder externen Anschlüssen.

Die Erfindung führt in einem dritten Aspekt auf ein Fahrzeug, insbesondere einen PKW oder ein Nutzfahrzeug oder einen Anhänger, aufweisend mindestens eine Mehrkanal-Reinigungsvorrichtung gemäß dem ersten Aspekt der Erfindung und/oder ein Sensorreinigungsmodul gemäß dem zweiten Aspekt der Erfindung. In einem Fahrzeug gemäß dem dritten Aspekt der Erfindung können die Vorteile der Mehrkanal-Reinigungsvorrichtung gemäß dem ersten Aspekt der Erfindung und/oder ein Sensorreinigungsmodul gemäß dem zweiten Aspekt der Erfindung Vorteilhaft genutzt werden. Insbesondere ermöglicht eine zuverlässige Reinigung von Sensoroberfläche der Sensoren des Fahrzeugs durch eine verbesserte Mehrkanal-Reinigungsvorrichtung gemäß dem Konzept der Erfindung eine zuverlässigere Funktion von auf diesen Sensoren basierenden Fahrassistenz-Funktionen, autonomen Fahrfunktionen und/oder teilautonomen Fahrfunktionen des Fahrzeugs. Der Anhänger kann insbesondere als ein Nutzfahrzeug-Anhänger oder PKW-Anhänger ausgebildet sein.

Ausführungsformen der Erfindung werden nun nachfolgend anhand der Zeichnung beschrieben. Diese soll die Ausführungsformen nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsformen sowie anhand der Zeichnung; diese zeigt in:
- Fig. 1: eine schematische Darstellung eines bevorzugten Düsenstrangs einer Mehrkanal-Reinigungsvorrichtung gemäß dem Konzept der Erfindung,
- Fig. 2: eine schematische Darstellung eines weiteren bevorzugten Düsenstrangs einer Mehrkanal-Reinigungsvorrichtung gemäß dem Konzept der Erfindung,
- Fig. 3: bevorzugte Ausführungsform einer MehrkanalReinigungsvorrichtung gemäß dem Konzept der Erfindung,
- Fig .4A: ein einzelner Druckzylinder in Form eines Druckzylindermoduls in einer seitlichen Querschnittsansicht,
- Fig. 4B: eine schematischen Draufsicht von vier Druckzylindermodulen zur Bildung eines Druckzylinderblocks,
- Fig. 5: zeigt eine schematische Darstellung eines Fahrzeugs, insbesondere eines PKW oder Nutzfahrzeugs, aufweisend eine MehrkanalReinigungsvorrichtung gemäß dem Konzept der Erfindung.

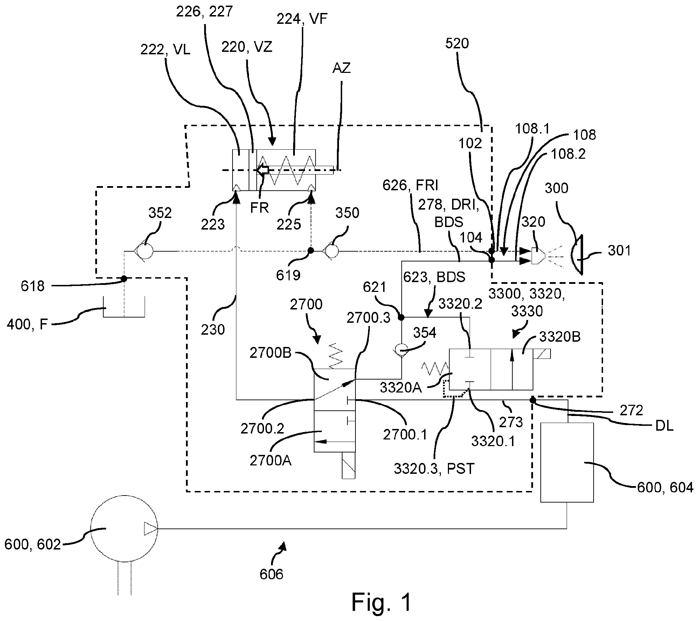

Fig. 1 zeigt einen Düsenstrang 520 einer Mehrkanal-Reinigungsvorrichtung 100 gemäß dem Konzept der Erfindung. Der Düsenstrang 520 ist ausgebildet zum Bereitstellen von Druckluft DL in Form eines Druckluft-Reinigungsimpulses DRI an einem Düsen-Druckluftanschluss 104 und zum Bereitstellen von Reinigungsflüssigkeit F in Form eines Flüssigkeits-Reinigungsimpulses FRI an einem Düsen-Flüssigkeitsanschluss 102. Der Düsenstrang 520 ist pneumatisch mit einem Moduldruckluftanschluss 272 der Mehrkanal-Reinigungsvorrichtung 100 verbunden, wobei der Moduldruckluftanschluss 272 ausgebildet ist zum Annehmen von Druckluft DL von einer Druckluftquelle 600, insbesondere einem Kompressor 602 und/oder einem Druckspeicher 604 einer Druckluftversorgungsanlage 606. Der Moduldruckluftanschluss 272 ist über eine Druckluft-Anschlussleitung 273 pneumatisch mit einem ersten Anschluss 2700.1 eines Schaltventils 2700 verbunden. Das Schaltventil 2700 ist vorliegend als 3/2-Wege-Magnetventil ausgebildet.

Der Düsenstrang 520 ist fluidführend mit einem Modulflüssigkeitsanschluss 618 der Mehrkanal-Reinigungsvorrichtung 100 verbunden. Der Modulflüssigkeitsanschluss 618 ist ausgebildet zum Annehmen von Reinigungsflüssigkeit F von einer Flüssigkeitsquelle 400. Die Flüssigkeitsquelle 400 kann insbesondere als ein Reinigungsflüssigkeit F aufnehmender Tank gebildet sein.

Der Düsenstrang 520 weist weiter einen Druckzylinder 220 mit einem als Zylinderstempel 227 ausgebildeten Trennmittel 226 auf, welcher axial entlang einer Zylinderachse AZ bewegbar ist und ein Zylindervolumen VZ des Druckzylinders 220 variabel in eine Luftkammer 222 und eine Flüssigkeitskammer 224 aufteilt. Der Druckzylinder 220 weist im Bereich der Luftkammer 222 einen Luftkammer-Anschluss 223 auf, über den die Luftkammer 222 mit Druckluft DL beaufschlagbar ist, um die Luftkammer 222 zu füllen. Bei einem Beaufschlagen des Luftkammer-Anschlusses 223 erfolgt ein Expandieren eines Luftkammervolumens VL der Luftkammer 222 unter Verschieben des Trennmittels 226 gegen eine Rückstellkraft FR, wobei sich gleichzeitig ein Flüssigkeitskammervolumen VF der Flüssigkeitskammer 224 verkleinert. Vorliegend wird das Trennmittel 226 in Form des Zylinderstempels 227 von einer Rückstellfeder 228 im Druckzylinder 220 gehalten, wodurch die Rückstellfeder 228 bei Auslenkung des Zylinderstempels 227 die Rückstellkraft FR erzeugt. Der Luftkammer-Anschluss 223 ist pneumatisch über eine Luftkammer-Leitung 230 mit einem zweiten Anschluss 2700.2 des Schaltventils 2700 verbunden.

Der Druckzylinder 220 weist im Bereich der Flüssigkeitskammer 224 einen Flüssigkeitskammer-Anschluss 225 auf, über den die Flüssigkeitskammer 224 fluidführend mit der Flüssigkeits-Düsenleitung 626 verbunden ist. Der Flüssigkeitskammer-Anschluss 225 ist an einem Zylinder-Anschlusspunkt 619 mit der Flüssigkeits-Düsenleitung 626 fluidführend verbunden. Bei einem Beaufschlagen des Luftkammer-Anschlusses 223 mit Druckluft DL und einem Verschieben des Trennmittels 226 gegen die Rückstellkraft FR wird eine Menge von in der Flüssigkeitskammer 224 gehaltenen Reinigungsflüssigkeit F über den Flüssigkeitskammer-Anschluss 225 in Form eines Flüssigkeits-Reinigungsimpulses FRI über den Zylinder-Anschlusspunkt 619 und die Flüssigkeits-Düsenleitung 626 an dem Düsen-Flüssigkeitsanschluss 102 für mindestens eine Reinigungsdüse 320 bereitgestellt. Dies geschieht dadurch, dass das Flüssigkeitskammervolumen VF der Flüssigkeitskammer 224 durch das Verschieben des Trennmittels 226 verkleinert wird und die Reinigungsflüssigkeit F so aus dem Druckzylinder 220, insbesondere impulsartig, herausgedrückt wird.

Der Düsen-Druckluftanschluss 104 ist über die Druckluft-Düsenleitung 278 pneumatisch mit einem dritten Anschluss 2700.3 des Schaltventils 2700 verbunden.

Zwischen dem Zylinder-Anschlusspunkt 619 und dem Düsen-Flüssigkeitsanschluss 102 ist in der Flüssigkeits-Düsenleitung 626 ein Ansaugdruck-Rückschlagventil 350 angeordnet.

Zwischen dem Zylinder-Anschlusspunkt 619 und dem ModulFlüssigkeitsanschluss 618 ist in der Flüssigkeits-Düsenleitung 626 ein Flüssigkeitsimpuls-Rückschlagventil 352 angeordnet. Das Flüssigkeitsimpuls-Rückschlagventil 352 verhindert, das beim Bereitstellen des Flüssigkeits-Reinigungsimpulses FRI Reinigungsflüssigkeit F in Richtung des Modul-Flüssigkeitsanschlusses 618 entweicht.

In einer Belüftungsstellung 27000A des Schaltventils 270 ist der erste Anschluss 2700.1 mit dem zweiten Anschluss 2700.2 pneumatisch verbunden und der dritte Anschluss 2700.3 gesperrt. In dieser Belüftungsstellung 2700A wird somit ein am Moduldruckluftanschluss 272 anliegender Luftdruck an den Luftkammer-Anschluss 223 weitergeleitet, was eine Expansion der Luftkammer 222 und ein Bereitstellen eines Flüssigkeits-Reinigungsimpulses FRI am Düsen-Flüssigkeitsanschluss 102 zur Folge hat. Folglich erfolgt ein Beaufschlagen einer Sensoroberfläche 300 mit dem Flüssigkeits-Reinigungsimpuls FRI über die Reinigungsdüse 320.

In einer Entlüftungsstellung 2700B des Schaltventils 2700 ist - wie vorliegend dargestellt - der zweite Anschluss 2700.2 mit dem dritten Anschluss 2700.3 pneumatisch verbunden und der erste Anschluss 2700.1 gesperrt. Diese Entlüftungsstellung 2700B hat eine Entlüftung des Luftkammer-Anschlusses 223 zur Folge, wodurch sich das Trennmittel 226 durch die Rückstellkraft FR zurückbewegt, und sowohl das Luftkammervolumens VL der Luftkammer 222 sich verkleinert, als auch das Flüssigkeitskammervolumen VF der Flüssigkeitskammer 224 sich vergrößert. Durch das Zurückbewegen des Trennmittels 226 entsteht ein Unterdruck am Flüssigkeitskammer-Anschluss 225. Aufgrund des Ansaugdruck-Rückschlagventils 350 wirkt der Unterdruck nur am ModulFlüssigkeitsanschluss 618 (und nicht am Düsen-Flüssigkeitsanschluss 102), wodurch neue Reinigungsflüssigkeit F von der Flüssigkeitsquelle 400 in die Flüssigkeitskammer 224 gesaugt wird, insbesondere ohne dass eine Pumpe oder dergleichen Fördereinrichtung benötigt wird.

Gleichzeitig bewirkt das Zurückbewegen des Trennmittels 226 einen Überdruck am Luftkammer-Anschluss 223, welcher ein Strömen von Druckluft DL über den zweiten Anschluss 2700.2 und den dritten Anschluss 2700.3 zum Düsen-Druckluftanschluss 104 zur Folge hat, wodurch ein Druckluft-Reinigungsimpuls DRI am Düsen-Druckluftanschluss 104 bereitgestellt wird. Folglich wird über die Reinigungsdüse 320 die Sensoroberfläche 300 zwecks Reinigung mit dem Druckluft-Reinigungsimpuls DRI beaufschlagt. Das Schaltventil 270 weist insbesondere eine relativ große Nennweite auf, um den Reinigungs-Druckluftimpuls vorteilhaft ohne Druckverlust an die Druckluft-Düsenleitung 278 weiterzuleiten. Insbesondere weist das Schaltventil eine Nennweite auf, die größer als der oder gleich dem Durchmesser der Druckluft-Düsenleitung 278 und/oder der Luftkammer-Leitung 230.

Ein Durchgang des Reinigungsvorgangs ist damit abgeschlossen und kann bei Bedarf durch ein Zurückschalten des Schaltventils 2700 in die Belüftungsstellung 2700A wiederholt werden.

Der Düsenstrang 520 weist weiter ein Bypassventil 3300 und ein Druckluftimpuls-Rückschlagventil 354 auf. Das Bypassventil 3300 ist vorliegend in Form eines 2/2-Wegeventils 3320, nämlich eines 2/2-Wege-Magnetventils 3330 gebildet. Das 2/2-Wegeventil 3320 ist pneumatisch über einen ersten Anschluss 3320.1 mit der Druckluft-Anschlussleitung 273, und über einen zweiten Anschluss 3320.2 und einer Bypassleitung 623 mit einem Bypass-Anschlusspunkt 621 der Druckluft-Düsenleitung 278 pneumatisch verbunden.

Das Druckluftimpuls-Rückschlagventil 354 ist zwischen dem dritten Anschluss 2700.3 des Schaltventils 2700 und dem Bypass-Anschlusspunkt 621 in der Druckluft-Düsenleitung 278 angeordnet.

In einer Schließstellung 3320A das 2/2-Wegeventils 3320 bzw. des Bypassventils 3300 ist der erste Anschluss 2320.1 von dem zweiten Anschluss 2320.2 pneumatisch getrennt. In dieser Schließstellung 2320A ist die Funktionsweise der Mehrkanal-Reinigungsvorrichtung 100 mittels des Druckzylinders 220 wie oben beschrieben. Durch ein Schalten des Bypassventils 3300 kann jedoch unter Umgehung des Schaltventils 2700 der Düsen-Druckluftanschluss 104 direkt mit Druckluft DL vom Moduldruckluftanschluss 272 versorgt werden. Vorliegend geschieht dies, indem das Bypassventil 3300 in Form des 2/2-Wegeventils 3320 in eine Öffnungsstellung 3320B geschaltet wird, in der der erste Anschluss 3320.1 mit dem zweiten Anschluss 3320.2 pneumatisch verbunden wird. Hierdurch kann die am Moduldruckluftanschluss 272 anliegende Druckluft DL direkt über den Bypass-Anschlusspunkt 621 und die Druckluft-Düsenleitung 278 weitergeleitet werden zum Bereitstellen einer Bypass-Druckluftströmung BDS am Düsen-Druckluftanschluss 104. Durch das Bypassventil 3300 wird somit vorteilhaft ein Beaufschlagen der Sensoroberfläche 300 mit Druckluft DL, insbesondere mit einer Bypass-Druckluftströmung BDS, ermöglicht, ohne den Druckzylinder 220 zu betätigen.

Das Druckluftimpuls-Rückschlagventil 354 stellt sicher, dass - wenn sich das 2/2-Wegeventil 3320 in der Öffnungsstellung 3320B und das Schaltventil in der Entlüftungsstellung 2700B befindet - die Druckluft DL nicht in Richtung des Schaltventils 2700 und somit in die Luftkammer 222 des Druckzylinders 220 strömen kann.

Optional kann das 2/2-Wegeventil 3320 am ersten Anschluss 3320.1 eine Steuerleitung 3320.3 zum Bereitstellen eines Steuerdrucks PST aufweisen.

Die Mehrkanal-Reinigungsvorrichtung 100 kann weiter eine Düsenanschlussleitung 108 aufweisen, die ausgebildet ist zum luft- und/oder fluidführenden Verbinden einer oder mehrerer Reinigungsdüsen 320 mit der Mehrkanal-Reinigungsvorrichtung 100. Die Düsenanschlussleitung 108 kann als eine gemeinsame Leitung ausgebildet sein, die ausgebildet ist zum gleichzeitigen und/oder nacheinander folgenden Führen von sowohl Druckluft als auch Reinigungsflüssigkeit. In anderen bevorzugten Ausführungsformen kann die Düsenanschlussleitung 108 eine Flüssigkeits-Düsenanschlussleitung 108.1 und eine Druckluft-Düsenanschlussleitung 108.2 aufweisen und somit ausgebildet sein zum getrennten Führen der Medien zur Reinigungsdüse 320.

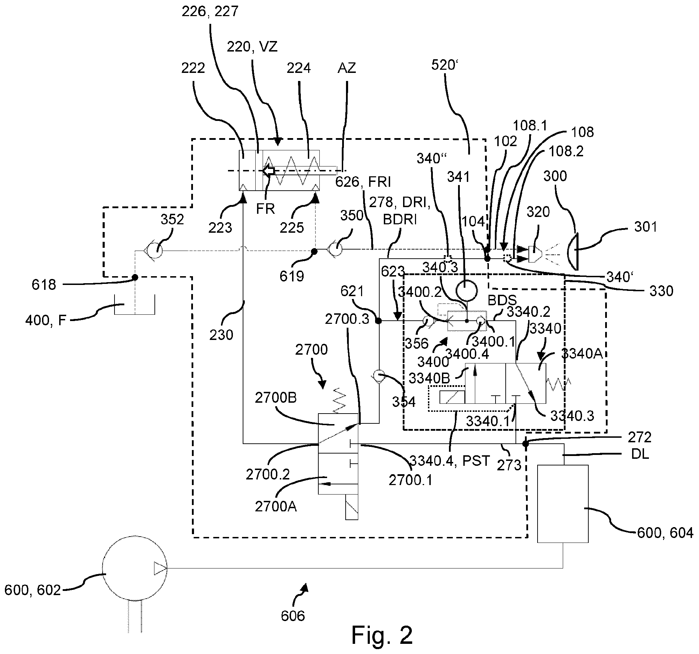

Fig. 2 zeigt einen weiteren bevorzugten Düsenstrang 520' für eine Mehrkanal-Reinigungsvorrichtung 100' gemäß dem Konzept der Erfindung, welche im Unterschied zu dem in Fig. 1 gezeigten Düsenstrang 520 als Bypassventil 3300 ein eine Anordnung aus einem 3/2-Wegeventil 3340 und zusätzlich einem Schnellentlüftungsventil 3400 aufweist. Das Schnellentlüftungsventil 3400 ist in der Bypassleitung 623 angeordnet. Mittels des Schnellentlüftungsventils 3400 kann vorteilhaft auf Basis der, insbesondere als kontinuierliche Strömung ausgebildeten, Bypass-Druckluftströmung BDS ein impulsartiger Bypass-Druckluft-Reinigungsimpuls BDRI generiert und am Düsen-Druckluftanschluss 104 bereitgestellt werden.

Das Schnellentlüftungsventil 3400 weist einen ersten Anschluss 3400.1 auf, welcher das Schnellentlüftungsventil 3400 mit dem einem zweiten Anschluss 334.2 des 3/2-Wegeventils 3340 pneumatisch verbindet. Das Schnellentlüftungsventil 3400 weist einen zweiten Anschluss 3400.2 auf, welcher das Schnellentlüftungsventil 3400 mit dem Bypass-Anschlusspunkt 621 pneumatisch verbindet. Das Schnellentlüftungsventil 3400 weist weiter einen dritten Anschluss 3400.3 auf, an den ein Druckluftpuffer 341 des Schnellentlüftungsventils 3400 pneumatisch angeschlossen ist. Das Schnellentlüftungsventil 3400 ist in der Weise eines Auswahlventils gebildet mit einem Ventilkörper 3400.4, welcher von dem ersten Anschluss 3400.1 und dem zweiten Anschluss 3400.2 denjenigen sperrt, an dem der schwächere Luftdruck anliegt und den jeweils anderen Anschluss pneumatisch mit dem dritten Anschluss 3400.3 verbindet.

Weiter ist in der Bypassleitung 623 zwischen dem zweiten Anschluss 3340.2 des 3/2-Wegeventils 3340 und dem Bypass-Anschlusspunkt 621 ein Bypass-Rückschlagventil 356 angeordnet, welches in einer Strömungsrichtung vom 3/2-Wegeventil 334 zum Bypass-Anschlusspunkt 621 öffnet und in Gegenrichtung sperrt. In einer Öffnungsstellung 3340B des 3/2-Wegeventils 3340 wird - analog zur Öffnungsstellung 3320B des in Fig. 2 gezeigten 2/2-Wegeventils 3320 - ein erster, zur Druckluft-Anschlussleitung 273 führender Anschluss 3340.1 des 3/2-Wegeventils 3340 mit dem zweiten Anschluss 3340.2 pneumatisch verbunden. Dies hat zur Folge, dass am Moduldruckluftanschluss 272 anliegende Druckluft DL in Form der Bypass-Druckluftströmung BDS an den ersten Anschluss 3400.1 des Schnellentlüftungsventils 3400 weitergeleitet wird, wodurch der Ventilkörper 3400.4 sperrend gegen den zweiten Anschluss 3400.2 gedrückt wird und über den dritten Anschluss 3400.3 der Druckluftpuffer 341 mit Druckluft DL gefüllt wird. Wenn nun das 3/2-Wegeventil 3340 in eine Schließstellung 3340A geschaltet wird, wird der zweite Anschluss 3340.2 pneumatisch mit einem dritten, insbesondere in die Umgebung entlüftenden, Entlüftungsanschluss 3340.3 verbunden und der erste Anschluss 3340.1 gesperrt. Als Folge dessen fällt der Luftdruck am ersten Anschluss 3400.1 des Schnellentlüftungsventils auf einen Umgehungsdruck ab und der Ventilkörper 3400.4 wird, insbesondere durch eine Schnellentlüftungsventil-Steuerleitung 3400.5, durch den Druck der im Druckluftpuffer 341 gespeicherten Druckluft DL sperrend gegen den ersten Anschluss 3400.1 gedrückt. Folglich ist der zweite Anschluss 3400.2 geöffnet, wodurch die im Druckluftpuffer 341 gespeicherte Druckluft DL in Form des Bypass-Druckluft-Reinigungsimpulses BDRI über den zweiten Anschluss 3400.2 und weiter den Bypass-Anschlusspunkt 621 und die Druckluft-Düsenleitung 278 am Düsen-Druckluftanschluss 104 bereitgestellt werden kann. Das Druckluftimpuls-Rückschlagventil 354 verhindert dabei ein Strömen des Bypass-Druckluft-Reinigungsimpulses BDRI in Richtung des Schaltventils 2700.

Durch ein Zurückschalten des 3/2-Wegeventils 3340 in die Öffnungsstellung 3340B kann der Druckluftpuffer 341 wieder mit Druckluft DL gefüllt und der Vorgang zur Erzeugung des Bypass-Druckluft-Reinigungsimpulses BDRI - bei Bedarf und insbesondere beliebig oft und unabhängig vom Druckzylinder 220 - wiederholt werden.

Unabhängig von der Erzeugung einer Bypass-Druckluftströmung BDS und/oder eines Bypass-Druckluft-Reinigungsimpulses BDRI kann mittels des Druckzylinders 220 und des Schaltventils 2700 - wie in Zusammenhang mit Fig. 1 beschrieben - im bekannter Weise das Erzeugen eines Druckluft-Reinigungsimpulses DRI und/oder eines Flüssigkeits-Reinigungsimpulses FRI erfolgen.

Bei dem in Fig. 2 gezeigten Düsenstrang 520' verhindert das Bypass-Rückschlagventil 356, dass ein durch den Druckzylinder 220 erzeugter Druckluft-Reinigungsimpuls DRI, der über das Schaltventil 2700 in seiner Entlüftungsstellung 2700B auf die Druckluft-Düsenleitung 278 geleitet wird, zum Schnellentlüftungsventil 3400 gelangen kann.

Optional kann das 3/2-Wegeventil 3340 am ersten Anschluss 3340.1 eine Steuerleitung 3340.4 zum Bereitstellen eines Steuerdrucks PST aufweisen.

Das 3/2-Wegeventil 3340 ist insbesondere als normal öffnendes Ventil ausgebildet, das heißt dass sich das 3/2-Wegeventil 3340 in einem nicht angesteuerten, insbesondere unbestromten, Zustand, in der Öffnungsstellung 3340B befindet und in einem angesteuerten, insbesondere bestromten, Zustand, in die Schließstellung 3340A schaltet. Auf diese Weise muss das 3/2-Wegeventil 3340 nur zum Abgeben des Bypass-Druckluft-Reinigungsimpulses BDRI angesteuert, insbesondere bestromt, werden.

Generell ist es hinsichtlich möglichst geringer Druckverluste und dadurch eines möglichst starken Bypass-Druckluft-Reinigungsimpulses BDRI vorteilhaft, die Leitungslänge zwischen dem Schnellentlüftungsventil 340 und der Reinigungsdüse 320 möglichst kurz zu halten. In alternativen bevorzugten Ausführungsformen kann statt des gezeigten Schnellentlüftungsventils 340 ein alternatives, hier stark vereinfacht dargestelltes, weiteres Schnellentlüftungsventil 340' näher an der Reinigungsdüse 320 angeordnet werden, beispielsweise zwischen dem Druckluft-Düsenanschluss 104 und der Reinigungsdüse 320 in der Druckluft-Düsenanschlussleitung 108.2, oder alternativ als noch weiteres Schnellentlüftungsventil 340" in der Druckluft-Düsenleitung 278. Die Reinigungsdüse 320, die Düsenanschlussleitung 108 und das Schnellentlüftungsventil 340 können dabei insbesondere als Teil der Mehrkanal-Reinigungsvorrichtung 100 gebildet sein.

In Ausführungsformen - insbesondere mit einem alternativen, weiteren Schnellentlüftungsventil 340' oder einem alternativen, noch weiteren Schnellentlüftungsventil 340", aber auch in Ausführungsformen ohne Schnellentlüftungsventil - ist es vorteilhaft möglich, dass der dritte Anschluss 2700.3 des Schaltventils 2700 nicht mit der Druckluft-Düsenleitung 278 verbunden ist, sondern ausgebildet ist, in der Entlüftungsstellung 2700B direkt in die Umgebung zu entlüften. In derartigen Ausführungsformen kann somit das ein Druckluftimpuls-Rückschlagventil 354 und/oder das Bypass-Rückschlagventil 356 und/oder die Leitung zwischen dem dritten Anschluss 2700.3 des Schaltventils 2700 und dem Bypass-Anschlusspunkt 621 wegfallen. Es wird in derartigen Ausführungsformen somit kein durch den Druckzylinder 220 erzeugter Druckluft-Reinigungsimpuls DRI an der Druckluft-Düsenleitung 278 bereitgestellt, jedoch wird vorteilhaft eine konstruktive Vereinfachung der Mehrkanal-Reinigungsvorrichtung 100 erreicht, insbesondere durch den Wegfall der Rückschlagventile 354, 356. Die Bypassleitung 623 und die Druckluft-Düsenleitung 278 fallen in dieser Ausführungsform direkt zusammen und sind ausgebildet zum Führen des Bypass-Druckluftstroms BDS und/oder eines Bypass-Druckluft-Reinigungsimpulses BDRI vom Bypassventil 330 zum Druckluft-Düsenanschluss 104.

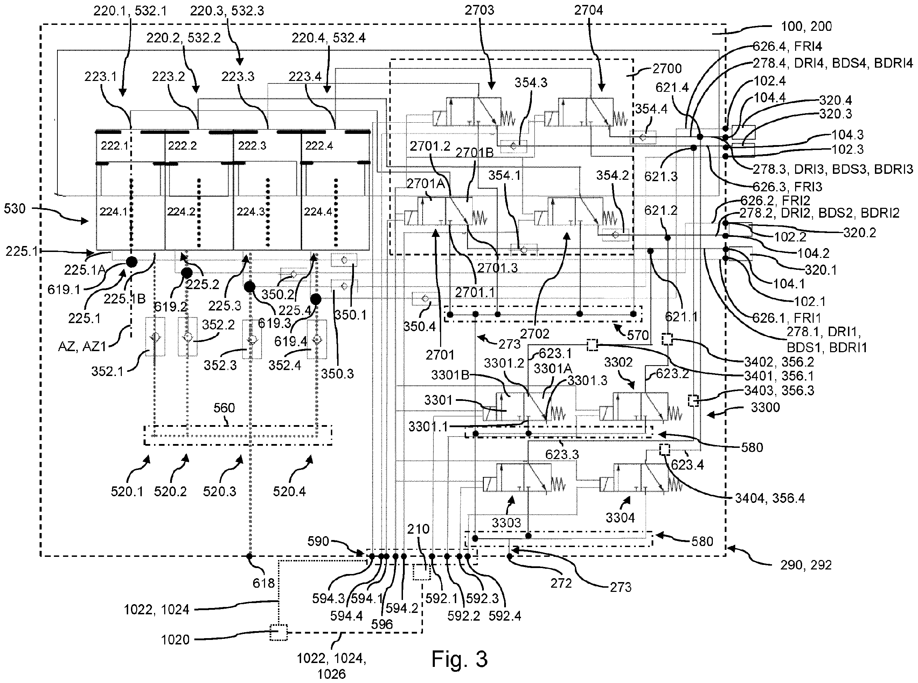

Fig. 3 zeigt eine Mehrkanal-Reinigungsvorrichtung 100 gemäß dem Konzept der Erfindung mit vier Düsensträngen 520, nämlich einem ersten Düsenstrang 520.1, einem zweiten Düsenstrang 520.2, einem dritten Düsenstrang 520.3 und einem vierten Düsenstrang 520.4. Jeder Düsenstrang 520 weist dabei ein Schaltventil 2700, einen Druckzylinder 220 und ein Bypassventil 3300 auf, die jeweils entsprechend Ihres zugeordneten Düsenstrangs nummeriert sind. Die vier Druckzylinder 220.1, 220.2, 220.3, 220.4 sind jeweils als Druckzylindermodul 532.1, 532.2, 532.3, 532.4 ausgebildet und zusammen montiert, insbesondere aneinandergeschraubt zur Bildung eines Druckzylinderblocks 530. Die Druckzylindermodule 532 und/oder der Druckzylinderblock 530 sind insbesondere aus einem geeigneten Material, insbesondere einem eine ausreichende Festigkeit aufweisenden Kunststoff oder aus Aluminium, gebildet.

Jeder Druckzylinder 220.1, 220.2, 220.3, 220.4 weist vorliegend, wie hier beispielhaft lediglich am ersten Druckzylinder 220.1 gezeigt, einen zum Modulflüssigkeitsanschluss 618 führenden, ersten Teil 225.1A des Flüssigkeitskammer-Anschlusses 225.1 und einen zur Flüssigkeits-Düsenleitung 626.1 führenden, zweiten Teil 225.1B des ersten Flüssigkeitskammer-Anschlusses 225.1 auf.

In sämtlichen Ausführungsformen kann alternativ bei jedem Druckzylinder 220 ein einziger Flüssigkeitskammer-Anschluss 225.1, 225.2, 225.3, 225.4 vorgesehen werden, welcher - wie in Fig. 1 und Fig. 2 gezeigt - über einen hier schematisch eingezeichneten Zylinder-Anschlusspunkt 619, 619.1, 619.2, 619.3, 619.4 mit der Flüssigkeit-Düsenleitung 626 verbunden ist. Über einen Zylinder-Anschlusspunkt 619 kann ein Druckzylinder 220 in konstruktiv vorteilhaft vereinfachter Weise über lediglich eine einzelne fluidführende Verbindung mit der jeweiligen Flüssigkeits-Düsenleitung 626 verbunden werden.

Jeder Düsenstrang 520 weist sowohl einen Düsen-Flüssigkeitsanschluss 102 und einen Düsen-Druckluftanschluss 104 auf, das heißt der erste Düsenstrang 520.1 weist einen ersten Düsen-Flüssigkeitsanschluss 102.1 zum Bereitstellen eines ersten Druckluft-Reinigungsimpulses DRI1 und einen ersten Düsen-Druckluftanschluss 104.1 zum Bereitstellen eines ersten Flüssigkeits-Reinigungsimpulses FRI1, der zweite Düsenstrang 520.2 weist einen zweiten Düsen-Flüssigkeitsanschluss 102.2 zum Bereitstellen eines zweiten Flüssigkeits-Reinigungsimpulses FRI2 und einen zweiten Düsen-Druckluftanschluss 104.2 zum Bereitstellen eines zweiten Druckluft-Reinigungsimpulses DRI2, der dritte Düsenstrang 520.3 weist einen dritten Düsen-Flüssigkeitsanschluss 102.3 zum Bereitstellen eines dritten Flüssigkeits-Reinigungsimpulses FRI3 und einen dritten Düsen-Druckluftanschluss 104.3 zum Bereitstellen eines dritten Druckluft-Reinigungsimpulses DRI3, und der vierte Düsenstrang 520.4 weist einen vierten Düsen-Flüssigkeitsanschluss 102.4 zum Bereitstellen eines vierten Flüssigkeits-Reinigungsimpulses FRI4 und einen vierten Düsen-Druckluftanschluss 104.4 zum Bereitstellen eines vierten Druckluft-Reinigungsimpulses DRI4 auf. Eine oder mehrere Reinigungsdüsen 320 können jeweils an eine Kombination aus einem Düsen-Flüssigkeitsanschluss 102 und einem Düsen-Druckluftanschluss 104 eines Düsenstrang 520 zwecks Versorgung mit Druckluft DL und Reinigungsflüssigkeit F angeschlossen werden. Vorliegend ist beispielhaft eine Reinigungsdüse 320 pro Düsenstrang 520 vorgesehen, nämlich eine erste Reinigungsdüse 320.1 für den ersten Düsenstrang 520.1, eine zweite Reinigungsdüse 320.2 für den zweiten Düsenstrang 520.2, eine dritte Reinigungsdüse 320.3 für den dritten Düsenstrang 520.3 und eine vierte Reinigungsdüse 320.4 für den vierten Düsenstrang 520.4.

Die Mehrkanal-Reinigungsvorrichtung 100 weist einen Flüssigkeits-Verteiler 560 auf, welcher den Modulflüssigkeitsanschluss 618 mit den einzelnen Flüssigkeits-Düsenleitungen 626.1, 626.2, 626.3, 626.4 fluidführend verbindet.

Die Mehrkanal-Reinigungsvorrichtung 100 weist einen Druckluft-Verteiler 570 auf, welcher den Moduldruckluftanschluss 272 mit den Schaltventilen 2701, 2702, 2703, 2704, insbesondere mit dessen erstem Anschluss 2701.1, 2702.1, 2703.1, 2704.1, pneumatisch verbindet.

Die Mehrkanal-Reinigungsvorrichtung 100 weist einen Druckluft-Bypass-Verteiler 580 auf, welcher - in Fig. 3 zweiteilig gezeigt - den Moduldruckluftanschluss 272 mit den Bypassleitungen 623.1, 623.2, 623.3, 623.4 pneumatisch verbindet.

Die Mehrkanal-Reinigungsvorrichtung 100 weist einen Modulsteueranschluss 590 auf, der als, insbesondere standardisierte, Steckverbindung zum Anschluss eines geeigneten Steckers einer Fahrzeugsteuerleitung 1024 ausgebildet sein kann, insbesondere zum signalführenden Anschluss der Mehrkanal-Reinigungsvorrichtung 100 und/oder des Sensorreinigungsmoduls 200 an eine Fahrzeugsteuereinheit 1020 des Fahrzeugs 1000. Alternativ oder zusätzlich kann die Mehrkanal-Reinigungsvorrichtung 100 eine Modulsteuereinheit 210 aufweisen, die insbesondere über eine - als ein Fahrzeugbus 1026 ausgebildete - Fahrzeugsteuerleitung 1024 signalführend mit der Fahrzeugsteuereinheit 1020 des Fahrzeugs 1000 verbindbar ausgebildet ist. Die Modulsteuereinheit 210 dient insbesondere als Schnittstelle zwischen der Reinigungsvorrichtung 100 und der Fahrzeugsteuereinheit 1020 und ermöglicht die signalführende Kommunikation über den Fahrzeugbus 1026 in einem geeigneten Protokoll, insbesondere CAN. Der Fahrzeugbus 1026 ist insbesondere als ein CAN-Bus ausgebildet.

Der Modulsteueranschluss 590 kann für jeden Düsenstrang 520 einen Bypass-Steueranschluss 592 aufweisen, vorliegend einen ersten Bypass-Steueranschluss 592.1, einen zweiten Bypass-Steueranschluss 592.2, einen dritten Bypass-Steueranschluss 592.3 und einen vierten Bypass-Steueranschluss 592.4, wobei jeder Bypass-Steueranschluss 592.1, 592.2, 592.3, 592.4 mit dem Bypassventil 3301, 3302, 3303, 3304 des jeweiligen Düsenstrangs 520.1, 520.2, 520.3, 520.4 signalführend, insbesondere zur Übertragung eines Steuersignals, verbunden ist.

Jeder Düsenstrang 520 weist ein in der jeweiligen Bypassleitung 623 angeordnetes Bypassventil 3300 zum Bereitstellen einer Bypass-Druckluftströmung BDS auf. Der erste Düsenstrang 520.1 weist in einer ersten Bypassleitung 623.1 ein erstes Bypassventil 3301 zum Bereitstellen einer ersten Bypass-Druckluftströmung BDS1 auf. Der zweite Düsenstrang 520.2 weist in einer zweiten Bypassleitung 623.2 ein zweites Bypassventil 3302 zum Bereitstellen einer zweiten Bypass-Druckluftströmung BDS2 auf. Der dritte Düsenstrang 520.3 weist in einer dritten Bypassleitung 623.3 ein drittes Bypassventil 3303 zum Bereitstellen einer dritten Bypass-Druckluftströmung BDS3 auf. Der vierte Düsenstrang 520.4 weist in einer vierten Bypassleitung 623.4 ein viertes Bypassventil 3304 zum Bereitstellen einer vierten Bypass-Druckluftströmung BDS4 auf.

Der Modulsteueranschluss 590 kann für jeden Düsenstrang 520 einen Schaltventil-Steueranschluss 594 aufweisen, vorliegend einen ersten Schaltventil-Steueranschluss 594.1, einen zweiten Schaltventil-Steueranschluss 594.2, einen dritten Schaltventil-Steueranschluss 594.3 und einen vierten Schaltventil-Steueranschluss 594.4, wobei jeder Schaltventil-Steueranschluss 594.1, 594.2, 594.3, 594.4 mit dem Schaltventil 2701, 2702, 2703, 2704 des jeweiligen Düsenstrangs 520.1, 520.2, 520.3, 520.4 signalführend, insbesondere zur Übertragung eines Steuersignals, verbunden ist.

Der Modulsteueranschluss 590 kann weiter einen Masseanschluss 596 aufweisen, insbesondere einen einzelnen Masseanschluss 596 für sämtliche Bypassventile 3301, 3302, 3303, 3304 und Schaltventile 2701, 2702, 2703, 2704 der Mehrkanal-Reinigungsvorrichtung 100.

Die Komponenten eines jeden Düsenstrangs 520 wurden bereits in Fig. 1 oder Fig. 2 beschrieben und finden sich in Fig. 3 mit entsprechender Nummerierung (die Nachkommastelle gibt die Zuordnung zum jeweiligen Düsenstrang an, mit Ausnahme der vierstelligen Bezugszeichen für die Ventile, wo die vierte Stelle die Zuordnung zum Düsenstrang, und die Nachkommastelle den jeweiligen Anschluss gekennzeichnet).

Die Kennzeichnung der Anschlüsse des Schaltventils 2700 und des Bypassventils 3300 wurde aus Gründen der Übersichtlichkeit nur für das erste Schaltventil 2701 und das erste Bypassventil 3301 vorgenommen und ergeben sich für die übrigen Schaltventile 2702, 2703, 2704 bzw. Bypassventile 3302, 3303, 3304 entsprechend.

Die in Fig. 3 gezeigte Mehrkanal-Reinigungsvorrichtung 100 kann optional -hier vereinfacht dargestellt - insbesondere für jeden Düsenstrang 520.1, 520.2, 520.3, 520.4, eine Anordnung eines Bypassventils 3300 mit einem Schnellentlüftungsventil 3400 aufweisen, wobei für jeden Düsenstrang 520.1, 520.2, 520.3, 520.4 das Schnellentlüftungsventil 3400 analog zu Fig. 2 in der jeweiligen Bypassleitung 623.1, 623.2, 623.3, 623.4 angeordnet ist, nämlich jeweils in der Reihenfolge Bypassventil 3300, Schnellentlüftungsventil 3400, Bypass-Rückschlagventil 356 und Bypass-Anschlusspunkt 621. Vorliegend ist somit - jeweils zusammen mit einem Bypass-Rückschlagventil 356 wie in Fig. 2 gezeigt - ein erstes Schnellentlüftungsventil 3401 des ersten Düsenstrangs 520.1 zum Bereitstellen eines ersten Bypass-Druckluft-Reinigungsimpulses BDRI1 mit einem ersten Bypass-Rückschlagventil 356.1 in einer ersten Bypassleitung 623.1, ein zweites Schnellentlüftungsventil 3402 des zweiten Düsenstrangs 520.2 zum Bereitstellen eines zweiten Bypass-Druckluft-Reinigungsimpulses BDRI2 mit einem zweiten Bypass-Rückschlagventil 356.2 in einer zweiten Bypassleitung 623.2, ein drittes Schnellentlüftungsventil 3403 des dritten Düsenstrangs 520.3 zum Bereitstellen eines dritten Bypass-Druckluft-Reinigungsimpulses BDRI3 mit einem dritten Bypass-Rückschlagventil 356.3 in einer dritten Bypassleitung 623.3, und ein viertes Schnellentlüftungsventil 3404 des vierten Düsenstrangs 520.4 zum Bereitstellen eines vierten Bypass-Druckluft-Reinigungsimpulses BDRI4 mit einem vierten Bypass-Rückschlagventil 356.4 in einer vierten Bypassleitung 623.4 angeordnet.

Die in Fig. 3 gezeigte Mehrkanal-Reinigungsvorrichtung 100 kann zur Bildung eines Mehrkanal-Sensorreinigungsmoduls 200 von einem Modulgehäuse 290 eingehaust angeordnet sein. Das Modulgehäuse 290 kann aus einem geeigneten Material, insbesondere einem eine ausreichende Festigkeit aufweisenden Kunststoff oder aus Aluminium, gebildet sein.

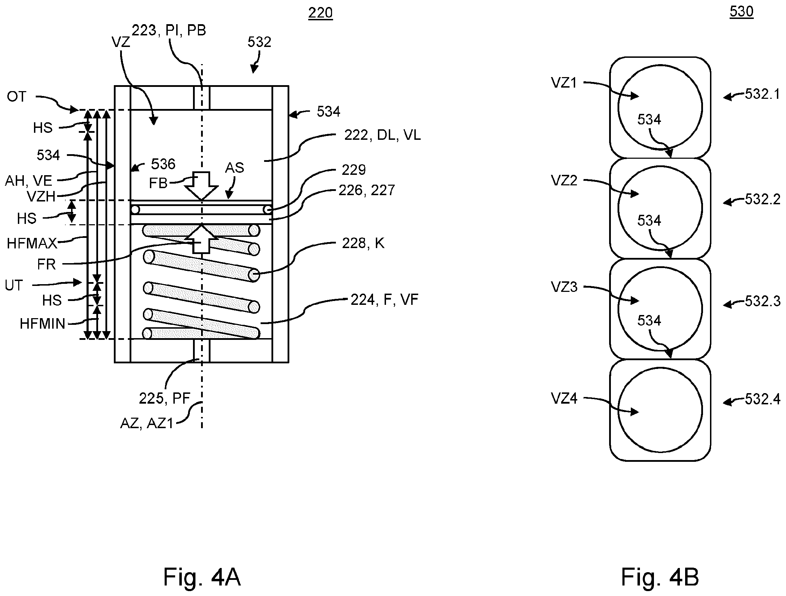

In Fig. 4A ist schematisch ein einzelner Druckzylinder 220 in Form eines Druckzylindermoduls 532 in einer seitlichen Querschnittsansicht gezeigt. Mehrere, insbesondere baugleiche Druckzylindermodule 532 können zum Bilden eines Druckzylinderblocks 530 zusammen montiert werden, insbesondere in einer Reihe und jeweils an einer Modulseite 534 aneinander angrenzend zusammen gefügt, insbesondere geschraubt, werden. Dies ist in Fig. 4B in einer schematischen Draufsicht von vier Druckzylindermodulen 532.1, 532.2, 532.3, 532.4 zur Bildung eines Druckzylinderblocks 530 beispielhaft gezeigt. Für eine bessere Anordnung einzelner oder mehrerer Druckzylindermodule 532 nebeneinander kann ein Druckzylindermodul 532 insbesondere wie in Fig. 4B gezeigt einen annähernd rechteckigen, insbesondere annähernd quadratischen, Außenquerschnitt aufweisen.

In Fig. 4A ist weiterhin ein Trennmittel 226 in Form eines Zylinderstempels 227 sichtbar, welches innerhalb des Zylindervolumens VZ des Druckzylinders 220, axial entlang der Zylinderachse AZ bewegbar und druckdicht an einer Innenwandung 536 des Druckzylinders 220 anliegend, angeordnet ist. Der Zylinderstempel 227 teilt somit das Zylindervolumen VZ in veränderbarer Weise in eine Druckluft DL aufnehmende Luftkammer 222 mit einem Luftkammervolumen VL und eine Reinigungsflüssigkeit F aufnehmende Flüssigkeitskammer 224 mit einem Flüssigkeitskammervolumen VF. Durch ein - sich über den Umfang des Zylinderstempels 227 erstreckendes - Anliegen des Zylinderstempels 227 an der Innenwandung 536 des Druckzylinders 220 wird die Luftkammer 222 fluiddicht von der Flüssigkeitskammer 224 getrennt. Über einen Luftkammer-Anschluss 223 kann die Luftkammer 222 einerseits mit Druckluft DL mit einem Beaufschlagungsdruck PB - zur Erzeugung einer auf den Zylinderstempel 227 wirkende Beaufschlagungskraft FB - beaufschlagt werden und andererseits zwecks Bereitstellung eines Druckluft-Reinigungsimpuls DRI durch das sich über die Rückstellkraft zurückbewegende Trennmittel 226 Druckluft DL mit einem Impulsdruck PI abgeben. Der Impulsdruck ergibt sich dabei insbesondere durch die Rückstellkraft multipliziert mit einer Stempelfläche AS des Zylinderstempels 227. Über einen Flüssigkeitskammer-Anschluss 225 kann die Flüssigkeitskammer 224 Reinigungsflüssigkeit F ansaugen und zwecks Bereitstellung eines Flüssigkeits-Reinigungsimpulses FRI mit einem Flüssigkeitsdruck PF abgeben. Der Flüssigkeitsdruck PF ist von dem Beaufschlagungsdruck PB abhängig, wobei jedoch nicht der gesamte Beaufschlagungsdruck PB am Flüssigkeitskammer-Anschluss 225 als Flüssigkeitsdruck PF genutzt werden kann, da durch die Überwindung der Rückstellkraft FR Verluste entstehen.

Optional kann der Zylinderstempel 227 zur besseren Abdichtung der Luftkammer 222 von der Flüssigkeitskammer 224 einen Dichtring 229, insbesondere aus Kunststoff und/oder Gummi, aufweisen.

Der Zylinderstempel 227 wird von einer Rückstellfeder 228 in dem Zylindervolumen VZ des Druckzylinders 220 gehalten, sodass bei einer Auslenkung, insbesondere durch eine Beaufschlagung des Luftkammeranschlusses 223 mit dem Beaufschlagungsdruck PB hervorgerufen, eine Rückstellkraft FR erzeugt wird.

Hierbei kann die Rückstellfeder 228 vorteilhaft ausgebildet sein, den Zylinderstempel 227 in einer Hubamplitude AH zu bewegen, welche sich entlang der Zylinderachse AZ über eine Zylindervolumenhöhe VZH des Zylindervolumens VZ, abzüglich einer Stempelhöhe HS des Zylinderstempels 227 und abzüglich einer minimalen Federhöhe HFMIN der Rückstellfeder 228 im komprimierten Zustand, erstreckt. Die Rückstellfeder 228 kann zum Erreichen dieser Hubamplitude AH insbesondere eine maximale Federhöhe HFMAX aufweisen.

Die Hubamplitude AH ist unter anderem von der maximalen Federhöhe HF abhängig. Die Hubamplitude AH ist der axiale Weg, den der Zylinderstempel 227 zurücklegen muss, um von einem unteren Totpunkt UT in einen oberen Totpunkt OT zu gelangen. Die Hubamplitude HA definiert somit ein effektives Fördervolumen VE, dass das pro Hub maximal förderbare Volumen an Reinigungsflüssigkeit F und/oder an Druckluft DL festlegt.

Über die Wahl einer Stempelhöhe HS eines Zylinderstempels 227 kann vorteilhaft die Menge an vom Druckzylinder 220 geförderter Reinigungsflüssigkeit F und Druckluft DL beeinflusst werden, insbesondere ohne die Form und Größe des Druckzylinders 220, insbesondere des Druckzylindermoduls 532, zu verändern. Durch die Wahl einer größeren Stempelhöhe HS vergrößert sich ein Stempelvolumen VS des Zylinderstempels 227. In der Folge verkleinert sich entsprechend das effektive Fördervolumen VE, weil ein größerer Anteil des Zylindervolumens VZ bereits vom Stempelvolumen VS des Zylinderstempels 227 eingenommen wird. Entsprechend verringert sich bei einer größeren Stempelhöhe HS das Volumen der vom Druckzylinder 220 geförderten Druckluft DL und Reinigungsflüssigkeit F, also das Volumen des Druckluft-Reinigungsimpulses DRI und des Flüssigkeits-Reinigungsimpulses FRI.

Der Druckzylinder 220 kann ein Zylindervolumen VZ von zwischen 5 ml und 80 ml, bevorzugt zwischen 10 ml und 40 ml, besonders bevorzugt zwischen 10 und 20 ml aufweisen.

In einer Ausführungsform, in der der Druckzylinder 220 ein Zylindervolumen VZ von 20 ml aufweist und eine Stempelhöhe HS des Zylinderstempels 220 so gewählt ist, dass ein Stempelvolumen VS von 8 ml resultiert, bleibt, wenn man vereinfachend ein durch die minimale Federhöhe HFMIN bedingtes Totvolumen von 2 ml annimmt, schätzungsweise ein effektives Fördervolumen VE von ca. 10 ml, das sowohl zum Bereitstellen des Druckluft-Reinigungsimpulses DRI über den einen Luftkammer-Anschluss 223 und des Flüssigkeits-Reinigungsimpulses FRI über den Flüssigkeitskammer-Anschluss 225 zur Verfügung steht. Das heißt, in einer derartigen Konfiguration kann ein Druckluft-Reinigungsimpuls DRI mit einem Volumen von 10 ml Druckluft DL und ein Flüssigkeits-Reinigungsimpuls FRI mit einem Volumen von 10 ml Reinigungsflüssigkeit F bereitgestellt werden.

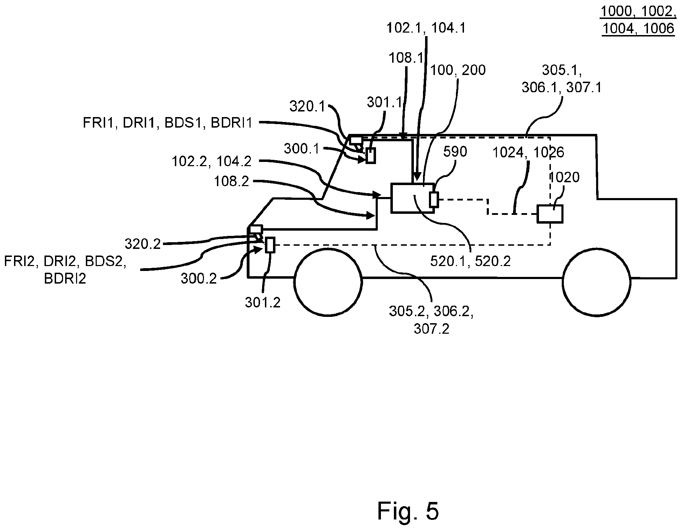

Fig. 5 zeigt eine schematische Darstellung eines Fahrzeugs 1000, insbesondere eines PKW 1002 oder Nutzfahrzeugs 1004 oder eines Anhängers 1006 - vorliegend in Form eines autonomen oder teilautonomen Fahrzeugs - aufweisend eine Mehrkanal-Reinigungsvorrichtung 100 mit einer Anzahl von Düsensträngen 520 für eine Anzahl von mindestens zwei Reinigungsdüsen 320, vorliegend mit einem ersten Düsenstrang 520.1 für eine erste Reinigungsdüse 320.1 zum Reinigen einer ersten Sensoroberfläche 300.1 eines als optischen Sensor, beispielsweise als Kamera, ausgebildeten ersten Sensors 301.1 und mit einem zweiten Düsenstrang 520.2 für eine zweite Reinigungsdüse 320.2 zum Reinigen einer zweiten Sensoroberfläche 300.2 eines als optischen Sensor, beispielsweise als Kamera, ausgebildeten zweiten Sensors 301.2.

Gleichwohl ist ein Einsatz der Mehrkanal-Reinigungsvorrichtung 100 in anderen Fahrzeugen möglich.

Die Mehrkanal-Reinigungsvorrichtung 100 ist insbesondere als ein Sensorreinigungsmodul 200 ausgebildet. Die Reinigungsvorrichtung 100 weist einen Modulsteueranschluss 590 auf, welcher mit einer Fahrzeugsteuereinheit 1020 über eine Fahrzeugsteuerleitung 1024 signalführend verbunden ist. Die Fahrzeugsteuerleitung 1024 ist insbesondere als ein Fahrzeugbus 1026, insbesondere CAN-Bus, ausgebildet.

Der erste Sensor 301.1 ist über eine erste Sensorleitung 306.1 mit der Fahrzeugsteuereinheit 1020 signalführend zur Übermittlung von ersten Sensorsignalen 305.1 verbunden. Insbesondere kann ein erstes Reinigungsprüfsignal 307.1 zum Feststellen, ob ein erster Flüssigkeits-Reinigungsimpuls FRI1 abgegeben wurde, über die erste Sensorleitung 306.1 an die Fahrzeugsteuereinheit 1020 übermittelt werden. In analoger Weise ist der zweite Sensor 301.2 über eine zweite Sensorleitung 106.2 mit der Fahrzeugsteuereinheit 1020 signalführend zur Übermittlung von zweiten Sensorsignalen 305.2, insbesondere eines zweiten Reinigungsprüfsignals 307.2, verbunden

Ein Reinigungsprüfsignal 307.1, 307.2 kann bei einem als Kamera ausgebildeten Sensor 301.1, 301.2 insbesondere mit Mitteln der Bilderkennung generiert werden, beispielsweise durch das Feststellen von Flüssigkeitspartikeln im Kamerabild.

Jede Reinigungsdüse 320.1, 320.2 ist zum Beaufschlagen der jeweiligen Sensoroberfläche 300.1, 300.2 mit einem Flüssigkeits-Reinigungsimpuls FRI1, FRI2 und/oder einem Druckluft-Reinigungsimpuls DRI1, DRI2 und/oder einer Bypass-Druckluftströmung BDS1, BDS2 und/oder einem Bypass-Druckluft-Reinigungsimpuls BDRI1, BDRI2 ausgebildet.

Jede Reinigungsdüse 320.1, 320.2 ist jeweils über einen Düsen-Flüssigkeitsanschluss 102.1, 102.2 und einen Düsen-Druckluftanschluss 104.1, 104.2 fluidführend mit der Mehrkanal-Reinigungsvorrichtung 100 verbunden. In Ausführungsformen, in denen die Reinigungsdüse 320 nicht direkt an der Reinigungsvorrichtung 100 oder dem Sensorreinigungsmodul 200 angeordnet ist, kann die Reinigungsdüse 320 über eine Düsenanschlussleitung 108.1, 108.2 fluidführend mit dem Düsen-Flüssigkeitsanschluss 102 und/oder dem Düsen-Druckluftanschluss 104 verbunden werden.

### BEZUGSZEICHENLISTE (Teil der Beschreibung)

- 100: Mehrkanal-Reinigungsvorrichtung
- 102: Düsen-Flüssigkeitsanschluss
- 102.1: erster Düsen-Flüssigkeitsanschluss
- 102.2: zweiter Düsen-Flüssigkeitsanschluss
- 102.3: dritter Düsen-Flüssigkeitsanschluss
- 102.4: vierter Düsen-Flüssigkeitsanschluss
- 104: Düsen-Druckluftanschluss
- 104.1: erster Düsen-Druckluftanschluss
- 104.2: zweiter Düsen-Druckluftanschluss
- 104.3: dritter Düsen-Druckluftanschluss
- 104.4: vierter Düsen-Druckluftanschluss
- 200: Sensorreinigungsmodul
- 220: Druckzylinder
- 220.1: erster Druckzylinder
- 220.2: zweiter Druckzylinder
- 220.3: dritter Druckzylinder
- 220.4: vierter Druckzylinder
- 221: Zylinderinnenwand des Druckzylinders
- 222: Luftkammer
- 223: Luftkammer-Anschluss
- 224: Flüssigkeitskammer
- 225: Flüssigkeitskammer-Anschluss
- 225.1: erster Flüssigkeitskammer-Anschluss
- 225.2: zweiter Flüssigkeitskammer-Anschluss
- 225.3: dritter Flüssigkeitskammer-Anschluss
- 225.4: vierter Flüssigkeitskammer-Anschluss
- 225.1A: erster Teil des ersten Flüssigkeitskammer-Anschlusses
- 225.1B: zweiter Teil des ersten Flüssigkeitskammer-Anschlusses
- 226: Trennmittel
- 227: Zylinderstempel
- 228: Rückstellfeder
- 229: Dichtring
- 230: Luftkammer-Leitung
- 270: Schaltventil
- 272: Moduldruckluftanschluss
- 273: Druckluft-Anschlussleitung
- 278: Druckluft-Düsenleitung
- 290: Modulgehäuse
- 292: Ventilpatronengehäuse
- 300: Sensoroberfläche
- 300.1: erste Sensoroberfläche
- 300.2: zweite Sensoroberfläche
- 301: Sensor
- 301.1: erster Sensor
- 301.2: zweiter Sensor
- 305: Sensorsignal
- 306: Sensorleitung
- 307: Sensorleitung
- 320: Reinigungsdüse
- 320.1: erste Reinigungsdüse
- 320.2: zweite Reinigungsdüse
- 320.3: dritte Reinigungsdüse
- 320.4: vierte Reinigungsdüse
- 341: Druckluftpuffer
- 350: Ansaugdruck-Rückschlagventil
- 352: Flüssigkeitsimpuls-Rückschlagventil
- 354: Druckluftimpuls-Rückschlagventil
- 356: Bypass-Rückschlagventil
- 356.1: erstes Bypass-Rückschlagventil
- 356.2: zweites Bypass-Rückschlagventil
- 356.3: drittes Bypass-Rückschlagventil
- 356.4: viertes Bypass-Rückschlagventil
- 400: Flüssigkeitsquelle
- 520: Düsenstrang
- 520.1: erster Düsenstrang
- 520.2: zweiter Düsenstrang
- 520.3: dritter Düsenstrang
- 520.4: vierter Düsenstrang
- 530: Druckzylinderblock
- 532: Druckzylindermodul
- 532.1: erstes Druckzylindermodul
- 532.2: zweites Druckzylindermodul
- 532.3: drittes Druckzylindermodul
- 532.4: viertes Druckzylindermodul
- 534: Modulseite
- 536: Innenwandung
- 560: Flüssigkeits-Verteiler
- 570: Druckluft-Verteiler
- 580: Druckluft-Bypass-Verteiler
- 590: Modulsteueranschluss
- 592: Steueranschluss
- 592.1: erster Bypass-Steueranschluss
- 592.2: zweiter Bypass-Steueranschluss
- 592.3: dritter Bypass-Steueranschluss
- 592.4: vierter Bypass-Steueranschluss
- 594: Schaltventil-Steueranschluss
- 594.1: erster Schaltventil-Steueranschluss
- 594.2: zweiter Schaltventil-Steueranschluss
- 594.3: dritter Schaltventil-Steueranschluss
- 594.4: vierter Schaltventil-Steueranschluss
- 600: Druckluftquelle
- 602: Kompressor
- 604: Druckspeicher
- 606: Druckluftversorgungsanlage
- 618: Modulflüssigkeitsanschluss
- 619: Zylinder-Anschlusspunkt
- 619.1: erster Zylinder-Anschlusspunkt
- 619.2: zweiter Zylinder-Anschlusspunkt
- 619.3: dritter Zylinder-Anschlusspunkt
- 619.4: vierter Zylinder-Anschlusspunkt
- 621: Bypass-Anschlusspunkt
- 621.1: erster Bypass-Anschlusspunkt
- 621.2: zweiter Bypass-Anschlusspunkt
- 621.3: dritter Bypass-Anschlusspunkt
- 621.4: vierter Bypass-Anschlusspunkt
- 623: Bypassleitung
- 623.1: erste Bypassleitung
- 623.2: zweite Bypassleitung
- 623.3: dritte Bypassleitung
- 623.4: vierte Bypassleitung
- 626: Flüssigkeits-Düsenleitung
- 626.1: erste Flüssigkeits-Düsenleitung
- 626.2: zweite Flüssigkeits-Düsenleitung
- 626.3: dritte Flüssigkeits-Düsenleitung
- 626.4: vierte Flüssigkeits-Düsenleitung
- 1000: Fahrzeug
- 1002: PKW
- 1004: Nutzfahrzeug
- 1020: Fahrzeugsteuereinheit
- 1022: Steuersignal
- 1024: Fahrzeugsteuerleitung
- 1026: Fahrzeugbus
- 2700: Schaltventil
- 2701: erstes Schaltventil
- 2702: zweites Schaltventil
- 2703: drittes Schaltventil
- 2704: viertes Schaltventil
- 27000A: Belüftungsstellung
- 2700B: Entlüftungsstellung
- 2700.1: erster Anschluss des Schaltventils
- 2700.2: zweiter Anschluss des Schaltventils
- 2700.3: dritter Anschluss des Schaltventils
- 2701.1: erster Anschluss des ersten Schaltventils
- 2702.1: erster Anschluss des zweiten Schaltventils
- 2703.1: erster Anschluss des dritten Schaltventils
- 2704.1: erster Anschluss des vierten Schaltventils
- 3300: Bypassventil
- 3301: erstes Bypassventil
- 3302: zweites Bypassventil
- 3303: drittes Bypassventil
- 3304: viertes Bypassventil
- 3320: 2/2-Wegeventil
- 3320A: Schließstellung des 2/2-Wegeventils
- 3320B: Öffnungsstellung des 2/2-Wegeventils
- 3320.1: erster Anschluss des 2/2-Wegeventils
- 3320.2: zweiter Anschluss des 2/2-Wegeventils
- 3320.3: Steuerleitung des 2/2-Wegeventils
- 3330: 2/2-Wege-Magnetventil
- 3340: 3/2-Wegeventil
- 3340.1: erster Anschluss des 3/2-Wegeventils
- 3340.2: zweiter Anschluss des 3/2-Wegeventils
- 3340.3: Entlüftungsanschluss des 3/2-Wegeventils
- 3340A: Schließstellung des 3/2-Wegeventils
- 3340B: Öffnungsstellung des 3/2-Wegeventils
- 3400: Schnellentlüftungsventil
- 3400.1: erster Anschluss des Schnellentlüftungsventils
- 3400.2: zweiter Anschluss des Schnellentlüftungsventils
- 3400.3: dritter Anschluss des Schnellentlüftungsventils
- 3400.4: Ventilkörper
- 3400.5: Schnellentlüftungsventil-Steuerleitung
- 3401: erstes Schnellentlüftungsventil
- 3402: zweites Schnellentlüftungsventil
- 3403: drittes Schnellentlüftungsventil
- 3404: viertes Schnellentlüftungsventil
- AH: Hubamplitude
- AS: Stempelfläche
- AZ: Zylinderachse
- BDS: Bypass-Druckluftströmung
- BDS1: erste Bypass-Druckluftströmung
- BDS2: zweite Bypass-Druckluftströmung
- BDS3: dritte Bypass-Druckluftströmung
- BDS4: vierte Bypass-Druckluftströmung
- BDRI: Bypass-Druckluft-Reinigungsimpuls
- BDRI1: erster Bypass-Druckluft-Reinigungsimpuls
- BDRI2: zweiter Bypass-Druckluft-Reinigungsimpuls
- BDRI3: dritter Bypass-Druckluft-Reinigungsimpuls
- BDRI4: vierter Bypass-Druckluft-Reinigungsimpuls
- DL: Druckluft
- DRI: Druckluft-Reinigungsimpuls
- DRI1: erster Druckluft-Reinigungsimpuls
- DRI2: zweiter Druckluft-Reinigungsimpuls
- DRI3: dritter Druckluft-Reinigungsimpuls
- DRI4: vierter Druckluft-Reinigungsimpuls
- F: Reinigungsflüssigkeit
- FB: Beaufschlagungskraft
- FR: Rückstellkraft
- FRI: Flüssigkeits-Reinigungsimpuls
- FRI1: erster Flüssigkeits-Reinigungsimpuls
- FRI2: zweiter Flüssigkeits-Reinigungsimpuls
- FRI3: dritter Flüssigkeits-Reinigungsimpuls
- FRI4: vierter Flüssigkeits-Reinigungsimpuls
- HS: Stempelhöhe
- HFMIN: minimale Federhöhe
- HFMAX: maximale Federhöhe
- PB: Beaufschlagungsdruck
- PI: Impulsdruck
- PF: Flüssigkeitsdruck
- PST: Steuerdruck
- UT: unterer Totpunkt
- OT: oberer Totpunkt
- VE: effektives Fördervolumen
- VF: Flüssigkeitskammervolumen
- VL: Luftkammervolumen
- VS: Stempelvolumen
- VZ: Zylindervolumen
- VZH: Zylindervolumenhöhe

## Patentansprüche

1. Mehrkanal-Reinigungsvorrichtung (100) für ein Fahrzeug (1000) zum Bereitstellen eines Flüssigkeits-Reinigungsimpulses (FRI) und/oder eines Druckluft-Reinigungsimpulses (DRI), für mindestens zwei Reinigungsdüsen (320, 320.1, 320.2), aufweisend:
- einen Moduldruckluftanschluss (272) zum Annehmen von Druckluft (DL),
- einen Modulflüssigkeitsanschluss (618) zum Annehmen von Reinigungsflüssigkeit (F),
**gekennzeichnet durch**
- mindestens zwei Düsenstränge (520, 520.1, 520.2, 520.3, 520.4), wobei ein Düsenstrang (520) ausgebildet ist zum Versorgen mindestens einer Reinigungsdüse (320, 320.1, 320.2) unabhängig von einem anderen Düsenstrang (520), wobei jeder Düsenstrang (520) aufweist:
- einen Druckzylinder (220, 220.1, 220.2, 220.3, 220.4) mit einem Zylindervolumen (VZ, VZ1, VZ2, VZ3, VZ4), aufweisend ein bewegliches Trennmittel (226, 226.1, 226.2, 226.3, 226.4), das das Zylindervolumen (VZ) in eine Druckluft (DL) aufnehmende Luftkammer (222, 222.1, 222.2, 222.3, 222.4) und eine Reinigungsflüssigkeit (F) aufnehmende Flüssigkeitskammer (224, 224.1, 224.2, 224.3, 224.4) fluiddicht aufteilt, wobei
- die Luftkammer (222) einen Luftkammer-Anschluss (223, 223.1, 223.2, 223.3, 223.4) aufweist, der mit Druckluft (DL) zum Füllen der Luftkammer (222) beaufschlagbar ist, wobei bei einem Füllen der Luftkammer (222) durch Bewegen des Trennmittels (226) gegen eine Rückstellkraft (FR, FR1, FR2, FR3, FR4) und Vergrößern der Luftkammer (222) ein Verkleinern der Flüssigkeitskammer (224) erfolgt, wodurch Reinigungsflüssigkeit (F) in Form des Flüssigkeits-Reinigungsimpulses (FRI, FRI1, FRI2, FRI3, FRI4) über einen Flüssigkeitskammer-Anschluss (225, 225.1, 225.2, 225.3, 225.4) der Flüssigkeitskammer (224) an einer Flüssigkeits-Düsenleitung (626, 626.1, 626.2, 626.3, 626.4) bereitgestellt wird, und
- ein Schaltventil (2700, 2701, 2702, 2703, 2704), das ausgebildet ist zum Herstellen einer pneumatischen Verbindung zwischen dem Moduldruckluftanschluss (272) und dem Luftkammer-Anschluss (223, 223.1, 223.2, 223.3, 223.4) in einer Belüftungsstellung (270A) , und
- ein Bypassventil (3300, 3301, 3302, 3303, 3304), das ausgebildet ist zum Herstellen einer pneumatischen Verbindung zwischen dem Moduldruckluftanschluss (272) und der Druckluft-Düsenleitung (278, 278.1, 278.2, 278.3, 278.4) vorbei an dem Schaltventil (2700, 2701, 2702, 2703, 2704) in einer Öffnungsstellung (3300B, 3320B, 3340B) zum Bereitstellen einer Bypass-Druckluftströmung (BDS, BDS1, BDS2, BDS3, BDS4).

2. Mehrkanal-Reinigungsvorrichtung (100) nach Anspruch 1, **dadurch gekennzeichnet, dass**
- das Trennmittel (226) ein axial entlang einer Zylinderachse (AZ, AZ1, AZ2, AZ3, AZ4) des Druckzylinders (220) bewegbarer und dichtend an einer Zylinderinnenwand (221) des Druckzylinders (220) anliegender Zylinderstempel (227) ist, wobei der Zylinderstempel (227) zylindrisch ausgebildet ist und eine Stempelhöhe (HS, HS1, HS2, HS3, HS4) aufweist und mit einer Rückstellfeder (228, 228.1, 228.2, 228.3, 228.4), aufweisend eine Federkonstante (K, K1, K2, K3, K4), zum Erzeugen der Rückstellkraft (FR) im Druckzylinder (220) gehalten wird.

3. Mehrkanal-Reinigungsvorrichtung (100) nach Anspruch 1 oder 2, **dadurch gekennzeichnet, dass**
- sämtliche Druckzylinder (220, 220.1, 220.2, 220.3, 220.4) der Mehrkanal-Reinigungsvorrichtung (100) in einem Druckzylinderblock (530), insbesondere als baugleiche Druckzylindermodule (532, 532.1, 532.2, 532.3, 532.4) angeordnet sind.

4. Mehrkanal-Reinigungsvorrichtung (100) nach Anspruch 2 oder 3, **dadurch gekennzeichnet, dass** ein Zylinderstempel (227) des Druckzylinders (220) eines Düsenstrangs (520) eine Stempelhöhe (HS, HS1, HS2, HS3, HS4) aufweist, die unterschiedlich ist von einer Stempelhöhe (HS, HS1, HS2, HS3, HS4) eines Zylinderstempels (227) des Druckzylinders (220) eines anderen Düsenstrangs (520).

5. Mehrkanal-Reinigungsvorrichtung (100) nach einem der Ansprüche 1 bis 4, **dadurch gekennzeichnet, dass** das Bypassventil (3300) als ein 2/2-Wegeventil (3320), insbesondere 2/2-Wege-Magnetventil (3330) und/oder Patronenventil (3360), ausgebildet ist.

6. Mehrkanal-Reinigungsvorrichtung (100) nach einem der Ansprüche 1 bis 4, **dadurch gekennzeichnet, dass** das Bypassventil (3300) als ein, insbesondere normal öffnendes, 3/2 Wegeventil (3340) ausgebildet ist, wobei
- das 3/2 Wegeventil (3340) ausgebildet ist zum Herstellen einer pneumatischen Verbindung zwischen dem Moduldruckluftanschluss (272) und der Druckluft-Düsenleitung (278, 278.1, 278.2, 278.3, 278.4) in einer Öffnungsstellung (3340A), und zum Herstellen einer pneumatischen Verbindung zwischen der Druckluft-Düsenleitung (278, 278.1, 278.2, 278.3, 278.4) und einem Entlüftungsanschluss (3340.3) des 3/2 Wegeventils (3340) in einer Schließstellung (3340B).

7. Mehrkanal-Reinigungsvorrichtung (100) nach Anspruch 6, **dadurch gekennzeichnet, dass** das Bypassventil (3300') als eine Anordnung aus einem, insbesondere normal öffnenden, 3/2 Wegeventil (3340) und einem Schnellentlüftungsventil (3400) gebildet ist, wobei
- das 3/2 Wegeventil (3340) ausgebildet ist zum Herstellen einer pneumatischen Verbindung zwischen dem Moduldruckluftanschluss (272) und dem Schnellentlüftungsventil (3400) in einer Öffnungsstellung (3340A), und zum Herstellen einer pneumatischen Verbindung zwischen dem Schnellentlüftungsventil (3400) und einem Entlüftungsanschluss (3340.3) des 3/2 Wegeventils (3340) in einer Schließstellung (3340B),
- das Schnellentlüftungsventil (3400) zwischen dem Bypassventil (3300) und der Druckluft-Düsenleitung (278) oder in einer die Reinigungsdüse (320) mit der Druckluft-Düsenleitung (278) pneumatisch verbindenden Druckluft-Düsenanschlussleitung (108.2) angeordnet und ausgebildet ist zum Annehmen der Bypass-Druckluftströmung (BDS, BDS1, BDS2, BDS3, BDS4) und zum Bereitstellen eines Bypass-Druckluft-Reinigungsimpulses (BDRI, BDRI1, BDRI2, BDRI3, BDRI4).

8. Mehrkanal-Reinigungsvorrichtung (100) nach einem der Ansprüche 1 bis 4, **dadurch gekennzeichnet, dass** das Bypassventil (3300") als ein, insbesondere normal schließendes,3/2 Wegeventil (3340) ausgebildet ist, wobei
- das 3/2 Wegeventil (3340) ausgebildet ist zum Herstellen einer pneumatischen Verbindung zwischen dem Moduldruckluftanschluss (272) und der Druckluft-Düsenleitung (278, 278.1, 278.2, 278.3, 278.4) in einer Öffnungsstellung (3340A), und zum Herstellen einer pneumatischen Verbindung zwischen dem Schnellentlüftungsventil (3400) und einem Entlüftungsanschluss (3340.3) des 3/2 Wegeventils (3340) in einer Schließstellung (3340B).

9. Mehrkanal-Reinigungsvorrichtung (100) nach einem der vorherigen Ansprüche, **dadurch gekennzeichnet, dass** mindestens zwei Druckzylinder (220, 220.1, 220.2, 220.3, 220.4) einem Düsenstrang (520, 520.1, 520.2, 520.3, 520.4) zugeordnet sind, derart
- dass die Luftkammer-Anschlüsse (223, 223.1, 223.2, 223.3, 223.4) der mindestens zwei Druckzylinder (220, 220.1, 220.2, 220.3, 220.4) pneumatisch mit einem einzigen Schaltventil (270) verbunden sind.

10. Mehrkanal-Reinigungsvorrichtung (100) nach einem der vorherigen Ansprüche, **gekennzeichnet durch** mindestens vier Düsenstränge (520, 520.1, 520.2, 520.3, 520.4) und/oder vier Druckzylinder (220, 220.1, 220.2, 220.3, 220.4).

11. Mehrkanal-Reinigungsvorrichtung (100) nach einem der vorherigen Ansprüche, **gekennzeichnet durch** einen Modulsteueranschluss (590).

12. Mehrkanal-Reinigungsvorrichtung (100) nach einem der vorherigen Ansprüche, **gekennzeichnet durch** eine Modulsteuereinheit (210), die ausgebildet ist zur Kommunikation zwischen der Mehrkanal-Reinigungsvorrichtung (100), insbesondere dem Modulsteueranschluss (590) der Mehrkanal-Reinigungsvorrichtung (100), und einer Fahrzeugsteuereinheit (1020) des Fahrzeugs (1000), insbesondere über einen Fahrzeugbus (1026).

13. Mehrkanal-Sensorreinigungsmodul (200), aufweisend ein Modulgehäuse (290), insbesondere ein Ventilpatronengehäuse (292), und eine Mehrkanal-Reinigungsvorrichtung (100) nach einem der vorherigen Ansprüche.

14. Fahrzeug (1000), insbesondere PKW (1002) oder Nutzfahrzeug (1004) oder Anhänger (1006), aufweisend mindestens eine Mehrkanal-Reinigungsvorrichtung (100) nach einem der Ansprüche 1 bis 12 und/oder ein Sensorreinigungsmodul (200) nach Anspruch 13.

## Claims

1. Multi-channel cleaning apparatus (100) for a vehicle (1000) for providing a liquid cleaning pulse (FRI) and/or a compressed-air cleaning pulse (DRI), for at least two cleaning nozzles (320, 320.1, 320.2), comprising:
- a module compressed-air port (272) for admitting compressed air (DL),
- a module liquid port (618) for admitting cleaning liquid (F),
**characterized by**
- at least two nozzle branches (520, 520.1, 520.2, 520.3, 520.4), wherein a nozzle branch (520) is configured to provide a supply to at least one cleaning nozzle (320, 320.1, 320.2) independently of another nozzle branch (520), wherein each nozzle branch (520) comprises:
- a pressure cylinder (220, 220.1, 220.2, 220.3, 220.4) with a cylinder volume (VZ, VZ1, VZ2, VZ3, VZ4), comprising a movable separating means (226, 226.1, 226.2, 226.3, 226.4) that divides the cylinder volume (VZ) in fluid-tight fashion into an air chamber (222, 222.1, 222.2, 222.3, 222.4), which accommodates compressed air (DL), and a liquid chamber (224, 224.1, 224.2, 224.3, 224.4), which accommodates cleaning liquid (F), wherein
- the air chamber (222) has an air chamber port (223, 223.1, 223.2, 223.3, 223.4) to which compressed air (DL) can be applied for the purposes of filling the air chamber (222), wherein, in the event of filling of the air chamber (222), movement of the separating means (226) counter to a restoring force (FR, FR1, FR2, FR3, FR4) and enlargement of the air chamber (222) result in a reduction in size of the liquid chamber (224), whereby cleaning liquid (F) is provided in the form of the liquid cleaning pulse (FRI, FRI1, FRI2, FRI3, FRI4) at a liquid nozzle line (626, 626.1, 626.2, 626.3, 626.4) via a liquid chamber port (225, 225.1, 225.2, 225.3, 225.4) of the liquid chamber (224), and
- a switching valve (2700, 2701, 2702, 2703, 2704) that is configured to produce a pneumatic connection between the module compressed-air port (272) and the air chamber port (223, 223.1, 223.2, 223.3, 223.4) in an air admission position (270A), and
- a bypass valve (3300, 3301, 3302, 3303, 3304) that is configured to produce a pneumatic connection between the module compressed-air port (272) and the compressed-air nozzle line (278, 278.1, 278.2, 278.3, 278.4), bypassing the switching valve (2700, 2701, 2702, 2703, 2704), in an open position (3300B, 3320B, 3340B) in order to provide a bypass compressed-air flow (BDS, BDS1, BDS2, BDS3, BDS4).

2. Multi-channel cleaning apparatus (100) according to Claim 1, **characterized in that**
- the separating means (226) is a cylinder plunger (227) which is movable axially along a cylinder axis (AZ, AZ1, AZ2, AZ3, AZ4) of the pressure cylinder (220) and which bears sealingly against a cylinder inner wall (221) of the pressure cylinder (220), wherein the cylinder plunger (227) is of cylindrical form and has a plunger height (HS, HS1, HS2, HS3, HS4) and is held in the pressure cylinder (220) by means of a restoring spring (228, 228.1, 228.2, 228.3, 228.4), which has a spring constant (K, K1, K2, K3, K4), for generating the restoring force (FR).

3. Multi-channel cleaning apparatus (100) according to Claim 1 or 2, **characterized in that**
- all pressure cylinders (220, 220.1, 220.2, 220.3, 220.4) of the multi-channel cleaning apparatus (100) are arranged in one pressure cylinder block (530), in particular as structurally identical pressure cylinder modules (532, 532.1, 532.2, 532.3, 532.4).

4. Multi-channel cleaning apparatus (100) according to Claim 2 or 3, **characterized in that** a cylinder plunger (227) of the pressure cylinder (220) of one nozzle branch (520) has a plunger height (HS, HS1, HS2, HS3, HS4) that differs from a plunger height (HS, HS1, HS2, HS3, HS4) of a cylinder plunger (227) of the pressure cylinder (220) of another nozzle branch (520).

5. Multi-channel cleaning apparatus (100) according to any one of Claims 1 to 4, **characterized in that** the bypass valve (3300) is configured as a 2/2 directional valve (3320), in particular 2/2 directional solenoid valve (3330) and/or cartridge valve (3360).

6. Multi-channel cleaning apparatus (100) according to any one of Claims 1 to 4, **characterized in that** the bypass valve (3300) is configured as an in particular normally-open 3/2 directional valve (3340), wherein
- the 3/2 directional valve (3340) is configured to produce a pneumatic connection between the module compressed-air port (272) and the compressed-air nozzle line (278, 278.1, 278.2, 278.3, 278.4) in an open position (3340A), and to produce a pneumatic connection between the compressed-air nozzle line (278, 278.1, 278.2, 278.3, 278.4) and an exhaust port (3340.3) of the 3/2 directional valve (3340) in a closed position (3340B).

7. Multi-channel cleaning apparatus (100) according to Claim 6, **characterized in that** the bypass valve (3300') is formed as an arrangement composed of an in particular normally-open 3/2 directional valve (3340) and a quick exhaust valve (3400), wherein
- the 3/2 directional valve (3340) is configured to produce a pneumatic connection between the module compressed-air port (272) and the quick exhaust valve (3400) in an open position (3340A), and to produce a pneumatic connection between the quick exhaust valve (3400) and an exhaust port (3340.3) of the 3/2 directional valve (3340) in a closed position (3340B),
- the quick exhaust valve (3400) is arranged between the bypass valve (3300) and the compressed-air nozzle line (278) or in a compressed-air nozzle connection line (108.2) that pneumatically connects the cleaning nozzle (320) to the compressed-air nozzle line (278), and said quick exhaust valve is designed to admit the bypass compressed-air flow (BDS, BDS1, BDS2, BDS3, BDS4) and to provide a bypass compressed-air cleaning pulse (BDRI, BDRI1, BDRI2, BDRI3, BDRI4).

8. Multi-channel cleaning apparatus (100) according to any one of Claims 1 to 4, **characterized in that** the bypass valve (3300'') is configured as an in particular normally-closed 3/2 directional valve (3340), wherein
- the 3/2 directional valve (3340) is configured to produce a pneumatic connection between the module compressed-air port (272) and the compressed-air nozzle line (278, 278.1, 278.2, 278.3, 278.4) in an open position (3340A), and to produce a pneumatic connection between the quick exhaust valve (3400) and an exhaust port (3340.3) of the 3/2 directional valve (3340) in a closed position (3340B).

9. Multi-channel cleaning apparatus (100) according to any one of the preceding claims, **characterized in that** at least two pressure cylinders (220, 220.1, 220.2, 220.3, 220.4) are assigned to one nozzle branch (520, 520.1, 520.2, 520.3, 520.4) in such a way
- that the air chamber ports (223, 223.1, 223.2, 223.3, 223.4) of the at least two pressure cylinders (220, 220.1, 220.2, 220.3, 220.4) are pneumatically connected to a single switching valve (270).

10. Multi-channel cleaning apparatus (100) according to any one of the preceding claims, **characterized by** at least four nozzle branches (520, 520.1, 520.2, 520.3, 520.4) and/or four pressure cylinders (220, 220.1, 220.2, 220.3, 220.4).

11. Multi-channel cleaning apparatus (100) according to any one of the preceding claims, **characterized by** a module control connection (590).

12. Multi-channel cleaning apparatus (100) according to any one of the preceding claims, **characterized by** a module control unit (210) that is configured for communication between the multi-channel cleaning apparatus (100), in particular the module control connection (590) of the multi-channel cleaning apparatus (100), and a vehicle control unit (1020) of the vehicle (1000), in particular via a vehicle bus (1026).

13. Multi-channel sensor cleaning module (200), comprising a module housing (290), in particular a valve cartridge housing (292), and a multi-channel cleaning apparatus (100) according to any one of the preceding claims.

14. Vehicle (1000), in particular passenger motor vehicle (1002) or utility vehicle (1004) or trailer (1006), comprising at least one multi-channel cleaning apparatus (100) according to any one of Claims 1 to 12 and/or a sensor cleaning module (200) according to Claim 13.

## Revendications

1. Dispositif de nettoyage (100) à canaux multiples pour un véhicule (1000) pour fournir une impulsion de nettoyage par liquide (FRI) et/ou une impulsion de nettoyage par air comprimé (DRI), pour au moins deux buses de nettoyage (320, 320.1, 320.2), comprenant :
- un raccord (272) d'air comprimé de module pour recevoir de l'air comprimé (DL),
- un raccord (618) de liquide de module pour recevoir du liquide de nettoyage (F),
**caractérisé par**
- au moins deux lignes de buses (520, 520.1, 520.2, 520.3, 520.4), une ligne de buses (520) étant conçue pour alimenter au moins une buse de nettoyage (320, 320.1, 320.2) indépendamment d'une autre ligne de buses (520), chaque ligne de buses (520) comprenant :
- un cylindre à pression (220, 220.1, 220.2, 220.3, 220.4) avec un volume de cylindre (VZ, VZ1, VZ2, VZ3, VZ4), présentant un moyen de séparation mobile (226, 226.1, 226.2, 226.3, 226.4), qui transforme le volume de cylindre (VZ) en une chambre pour de l'air (222, 222.1, 222.2, 222.3, 222.4)recevant de l'air comprimé (DL), et une chambre à liquide (224, 224.1, 224.2, 224.3, 224.4), recevant un liquide de nettoyage (F), dans lequel
- la chambre pour de l'air (222) présente un raccord (223, 223.1, 223.2, 223.3, 223.4) de chambre pour de l'air, qui est apte à être alimenté en air comprimé (DL) de façon à remplir la chambre pour de l'air (222), grâce à quoi, lors d'un remplissage de la chambre pour de l'air (222) par déplacement du moyen de séparation (226) à l'encontre d'une force de rappel (FR, FR1, FR2, FR3, FR4) et agrandissement de la chambre pour de l'air (222), il se produit une réduction de la chambre à liquide (224), ce qui fait que du liquide de nettoyage (F) sous forme de l'impulsion de nettoyage par liquide (FRI, FRI1, FRI2, FRI3, FRI4) est envoyé, par un raccord de chambre à liquide (225, 225.1, 225.2, 225.3, 225.4), depuis la chambre à liquide (224) jusqu'à une conduite (626, 626.1, 626.2, 626.3, 626.4) de buses de liquide, et
- une vanne de commutation (2700, 2701, 2702, 2703, 2704) adaptée pour établir une communication pneumatique entre le raccord (272) d'air comprimé de module et le raccord (223, 223.1, 223.2, 223.3, 223.4) de chambre pour de l'air dans une position d'alimentation en air (270A), et
- une vanne de dérivation (3300, 3301, 3302, 3303, 3304) adaptée pour établir une communication pneumatique entre le raccord (272) d'air comprimé de module et la conduite (278, 278.1, 278.2, 278.3, 278.4) de buses à air comprimé en passant par la vanne de commutation (2700, 2701, 2702, 2703, 2704) dans une position d'ouverture (3300B, 3320B, 3340B) pour fournir un flux d'air comprimé de dérivation (BDS, BDS1, BDS2, BDS3, BDS4).

2. Dispositif de nettoyage multi-canaux (100) selon la revendication 1, **caractérisé en ce que** :
- le moyen de séparation (226) est un élément de séparation axial le long d'un axe de cylindre (AZ, AZ1, AZ2, AZ3, AZ4) du cylindre à pression (220) et s'appliquant de manière étanche contre une paroi intérieure (221) du cylindre à pression (220), le tampon de cylindre (227) étant de forme cylindrique et présentant une hauteur de tampon (HS, HS1, HS2, HS3, HS4), et étant équipé d'un ressort de rappel (228, 228.1, 228.2, 228.3, 228.4), présentant une constante de ressort (K, K1, K2, K3, K4), maintenu dans le cylindre à pression (220) afin de générer la force de rappel (FR).

3. Dispositif de nettoyage à canaux multiples (100) selon la revendication 1 ou la revendication 2, **caractérisé en ce que**
- tous les cylindres à pression (220, 220.1, 220.2, 220.3, 220.4) du dispositif de nettoyage à canaux multiples (100) sont disposés dans un bloc de cylindres à pression (530), en particulier sous forme de modules de cylindres à pression (532, 532.1, 532.2, 532.3, 532.4) de construction identique.

4. Dispositif de nettoyage multi-canaux (100) selon la revendication 2 ou la revendication 3, **caractérisé en ce qu'**un tampon de cylindre (227) du cylindre à pression (220) d'une ligne de buses (520) présente une hauteur de tampon (HS, HS1, HS2, HS3, HS4) qui est différente d'une hauteur de tampon (HS, HS1, HS2, HS3, HS4) d'un tampon de cylindre (227) du cylindre à pression (220) d'une autre ligne de buses (520).

5. Dispositif de nettoyage multi-canaux (100) selon l'une des revendications 1 à 4, **caractérisé en ce que** la vanne de dérivation (3300) est un distributeur à 2/2 voies (3320), notamment un distributeur magnétique à 2/2 voies (3330) et/ou un distributeur à cartouche (3360).

6. Dispositif de nettoyage (100) à canaux multiples selon l'une des revendications 1 à 4, **caractérisé en ce que** la vanne de dérivation (3300) est réalisée sous la forme d'un distributeur à 3/2 voies (3340), en particulier à ouverture normale, dans lequel
- le distributeur à 3/2 voies (3340) est conçu de façon à établir une communication pneumatique entre le raccord (272) d'air comprimé de module et la conduite (278, 278.1, 278.2, 278.3, 278.4) de buses à air comprimé dans une position d'ouverture (3340A), et à établir une communication pneumatique entre la conduite (278, 278.1, 278.2, 278.3, 278.4) de buses à air comprimé et un raccord de purge (3340.3) du distributeur à 3/2 voies (3340) dans une position de fermeture (3340B).

7. Dispositif de nettoyage (100) à canaux multiples selon la revendication 6, **caractérisé en ce que** la vanne de dérivation (3300') est formée comme un ensemble distributeur à 3/2 voies (3340), notamment à ouverture normale, et vanne de purge rapide (3400), dans lequel
- le distributeur à 3/2 voies (3340) est conçu de façon à établir une communication pneumatique entre le raccord (272) d'air comprimé de module et la vanne de purge rapide (3400) dans une position d'ouverture (3340A), et pour établir une communication pneumatique entre la vanne de purge rapide (3400) et un raccord de purge (3340.3) du distributeur à 3/2 voies (3340) dans une position de fermeture (3340B),
- la vanne de purge rapide (3400) est montée entre la vanne de dérivation (3300) et la conduite (278) de buses à air comprimé ou dans une conduite (108.2) de raccordement de buses à air comprimé et est conçue de façon à recevoir le flux d'air comprimé de dérivation (BDS, BDS1, BDS2, BDS3, BDS4) et à fournir une impulsion de nettoyage par air comprimé de dérivation (BDRI, BDRI1, BDRI2, BDRI3, BDRI4).

8. Dispositif de nettoyage (100) à canaux multiples selon l'une des revendications 1 à 4, **caractérisé en ce que** la vanne de dérivation (3300'') est réalisée sous la forme d'un distributeur à 3/2 voies (3340), en particulier à fermeture normale,
- le distributeur à 3/2 voies (3340) étant conçu de façon à établir une communication pneumatique entre le raccord (272) d'air comprimé de module et la conduite (278, 278.1, 278.2, 278.3, 278.4) de buses à air comprimé dans une position d'ouverture (3340A), et à établir une communication pneumatique entre la vanne de purge rapide (3400) et un raccord de purge (3340.3) du distributeur 3/2 (3340) dans une position de fermeture (3340B).

9. Dispositif de nettoyage (100) à canaux multiples selon l'une des revendications précédentes, **caractérisé en ce qu'**au moins deux cylindres à pression (220, 220.1, 220.2, 220.3, 220.4) sont associés à une ligne de buses (520, 520.1, 520.2, 520.3, 520.4), de telle sorte que
- les raccords (223, 223.1, 223.2, 223.3, 223.4) de chambre pour de l'air des au moins deux cylindres à pression (220, 220.1, 220.2, 220.3, 220.4) sont reliés pneumatiquement à une seule vanne de commutation (270).

10. Dispositif de nettoyage (100) à canaux multiples selon l'une des revendications précédentes, **caractérisé par** au moins quatre lignes de buses (520, 520.1, 520.2, 520.3, 520.4) et/ou quatre cylindres à pression (220, 220.1, 220.2, 220.3, 220.4).

11. Dispositif de nettoyage (100) à canaux multiples selon l'une des revendications précédentes, **caractérisé par** un raccord (590) de commande de module.

12. Dispositif de nettoyage (100) à canaux multiples selon l'une des revendications précédentes, **caractérisé par** une unité (210) de commande de module configurée pour communiquer entre le dispositif de nettoyage (100) à canaux multiples, notamment la borne de commande de module (590) du dispositif de nettoyage (100) à canaux multiples, et une unité (1020) de commande de véhicule du véhicule (1000), notamment via un bus du véhicule (10286).

13. Module (200) de nettoyage de capteur multicanal, comprenant un boîtier de module (290), notamment un boîtier (292) de cartouche de vanne, et un dispositif de nettoyage (100) à canaux multiples selon l'une des revendications précédentes.

14. Véhicule (1000), notamment voiture (1002) ou véhicule utilitaire (1004) ou remorque (1006), comprenant au moins un dispositif de nettoyage (100) à canaux multiples selon l'une des revendications 1 à 12 et/ou un module (200) de nettoyage de capteur selon la revendication 13.
